(19) Europäisches Patentamt / European Patent Office / Office européen des brevets

(11) **EP 4 253 037 B1**

(12) **EUROPEAN PATENT SPECIFICATION**

(45) Date of publication and mention
of the grant of the patent:
**11.12.2024 Bulletin 2024/50**

(21) Application number: **22749620.5**

(22) Date of filing: **28.01.2022**

(51) International Patent Classification (IPC):
*B32B 5/26 (2006.01)*      *B32B 27/36 (2006.01)*
*B60R 13/02 (2006.01)*      *D04H 1/4374 (2012.01)*
*G10K 11/16 (2006.01)*      *G10K 11/168 (2006.01)*

(52) Cooperative Patent Classification (CPC):
**D04H 1/485; B32B 5/022; B32B 5/266;
D04H 1/435; D04H 1/4374; D04H 1/5412;
G10K 11/168;** B32B 2250/20; B32B 2262/0284;
B32B 2307/102; B32B 2307/54; B32B 2307/718;
B32B 2307/724; B32B 2307/7376; B32B 2307/746

(86) International application number:
**PCT/JP2022/003266**

(87) International publication number:
**WO 2022/168748 (11.08.2022 Gazette 2022/32)**

(54) **NON-WOVEN-FABRIC LAYERED BODY FOR SOUND-ABSORBING MATERIAL, AND SOUND-ABSORBING MATERIAL**

MEHRSCHICHTIGER VLIESSTOFFKÖRPER FÜR SCHALLABSORBIERENDES MATERIAL UND SCHALLABSORBIERENDES MATERIAL

CORPS STRATIFIÉ DE TISSU NON TISSÉ POUR MATÉRIAU ABSORBANT ACOUSTIQUE, ET MATÉRIAU ABSORBANT ACOUSTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2021 JP 2021014756**

(43) Date of publication of application:
**04.10.2023 Bulletin 2023/40**

(73) Proprietor: **Toray Industries, Inc.**
**Tokyo 103-8666 (JP)**

(72) Inventors:
• **NAKAHARA, Makoto**
**Otsu-shi, Shiga 520-2141 (JP)**

• **OMORI, Taira**
**Otsu-shi, Shiga 520-2141 (JP)**

(74) Representative: **Prüfer & Partner mbB**
**Patentanwälte · Rechtsanwälte**
**Sohnckestraße 12**
**81479 München (DE)**

(56) References cited:
EP-A1- 3 730 684      WO-A1-2009/037765
WO-A1-2017/129468      WO-A1-2018/093458
JP-A- 2000 202 933      JP-A- 2000 202 933
JP-A- 2018 171 907      JP-A- 2019 207 274
JP-A- H1 158 571

**Description**

TECHNICAL FIELD

The present invention relates to a non-woven fabric for a sound-absorbing material, and a sound-absorbing material.

BACKGROUND ART

In recent years, quietness has been more emphasized than ever as one of commercial values of products in automobiles and electric products. In general, it is thought to be effective to increase the mass and thickness of a sound-absorbing material that serves as a countermeasure component in noise control. However, from the viewpoint of keeping a large space inside automobiles and living rooms as well as reducing fuel consumption in automobiles, weight reduction and compactification of sound-absorbing materials have been required. In addition, in automobiles, a technique of shaping a sound-absorbing material into a shape of a part by molding processing is frequently used in order to make the sound-absorbing material follow a complicated shape such as a body of an automobile and install the sound-absorbing material compactly.

Patent Document 1 proposes a molded article for a sound-absorbing material in which a composite material containing a base material made of a non-woven fabric or a resin foam and a skin material is clamped with a mold.

Further, Patent Document 2 proposes a sound-absorbing material including a fiber assembly containing a high-softening-point synthetic fiber staple having a fineness of 1.5 to 20 denier, a medium-softening-point synthetic fiber staple having a fineness of 1.5 to 15 denier, and a low-softening-point synthetic fiber staple having a fineness of 1.5 to 15 denier. Here, the thickness of a thread that is 9000m long and weighs 1g is defined as "1 denier"; which means that 1 tex = denier $\times$ 0.1111.

Patent Document 3 discloses a non-woven-fabric layered body for a sound-absorbing material, in which a non-woven fabric layer $\alpha$ and a non-woven fabric layer ß are layered, wherein the non-woven fabric layer $\alpha$ contains first type short fibers (50% by weight of a 6 denier black polyester (PET) fiber; 6 denier = 6.66 dtex), second type short fibers (40 by weight of a 10 denier black PET fiber; 10 denier = 11.11 dtex), and third type short fibers containing a resin in an outer surface layer (10% by weight of a 4 denier (4.4 decitex) low melt binder fiber; the fiber is a core-sheath polyester fiber with a lower melting temperature sheath), wherein a total content mass of the first type short fibers and the second type short fibers with respect to a total mass of the non-woven fabric layer $\alpha$ is 90% by mass (50 % + 40 %, respectively), and a content mass of the third type of short fibers Cl with respect to the total mass of the non-woven fabric layer $\alpha$ is 10% by mass; wherein the non-woven fabric layer $\beta$ contains short fibers containing a polyester resin, the content mass of these short fibers with respect to a total mass of the non-woven fabric layer $\beta$ being 400 by mass; wherein the non-woven fabric layer $\alpha$ and the non-woven fabric layer $\beta$ are heat-set at 175°C to melt the low-melt fibers and bond the nonwoven layers $\alpha$ and $\beta$.

Patent Document 4 discloses a sound absorbing liner comprising at leat one fibrous layer conistring f fuibers and a thermoset binder thermally molded to form the liner, wherein the fibers comprise thermoplastic side-by-side fibers whose sides differ such that the fiber has a frizzy or curved shape. The staple fiber length of frizzy fibers is between 32 and 76mm; the fiber is preferably 2 to 20 dtex, more preferably 2 to 10 dtex.

Patent Document 5 and Patent Document 6 disclose resin fibres where at least a sheath has a melting point that falls in the range of 160°C and 150°C, respectively.

PRIOR ART DOCUMENTS

PATENT DOCUMENTS

Patent Document 1: Japanese Patent Laid-open Publication No. 2012-24955
Patent Document 2: Japanese Patent Laid-open Publication No. 10-245755
Patent Document 3: WO 2018/093458 A1
Patent Document 4: WO 2017/129468 A1
Patent Document 5: EP 3 730 684 A1
Patent Document 6: WO 2009/037765 A1

## SUMMARY OF THE INVENTION

### PROBLEMS TO BE SOLVED BY THE INVENTION

According to findings by the present inventors, since the molded article for a sound-absorbing material disclosed in Patent Document 1 is molded by heating a non-woven fabric containing a yarn having a low melting point, it is easy to impart a shape by molding processing. However, in a case where the low-melting-point yarn having a low melting point is used or a large content mass thereof is used, there is a problem that the thickness after molding processing is reduced due to the adhesion action when the low-melting-point yarn is melted and re-solidified, and as a result, the sound-absorbing performance becomes poor.

On the other hand, since the sound-absorbing material disclosed in Patent Document 2 contains a high-softening-point synthetic fiber staple having a relatively high softening point, the heat resistance assuming a temperature rise inside automobiles tends to be relatively excellent. However, in a case where the content of the medium-softening-point synthetic fiber staple is large, there is a problem that the thickness after molding processing is reduced due to the melting and the adhesion action, and as a result, the sound-absorbing performance becomes poor.

Furthermore, there is a problem that the surface of the sound-absorbing material is likely to be scraped or break due to friction between the sound-absorbing material such as a non-woven fabric and the mold during molding processing. Therefore, in view of the above circumstances, an object of the present invention is to provide a non-woven-fabric layered body for a sound-absorbing material which has a good sinking repulsive force during molding, is excellent in thickness recoverability, is excellent in molding followability to a body or the like of an automobile having a complicated shape, and is excellent in sound-absorbing performance.

### SOLUTIONS TO THE PROBLEMS

(1) A non-woven-fabric layered body for a sound-absorbing material is provided in which a non-woven fabric layer $\alpha$ and a non-woven fabric layer $\beta$ are layered, in which the non-woven fabric layer $\alpha$ contains short fibers A having a fineness of 0.4 to 3.8 dtex, short fibers B having a fineness of 4.0 to 22.0 dtex, and short fibers C1 containing a resin having a melting point of 135 to 190°C in an outer surface layer, a total content mass of the short fibers A and the short fibers B with respect to a total mass of the non-woven fabric layer $\alpha$ is 86 to 98% by mass, a content mass of the short fibers C1 with respect to the total mass of the non-woven fabric layer $\alpha$ is 2 to 14% by mass, and a content mass ratio of the short fibers A and the short fibers B (content mass of short fibers A/content mass of short fibers B) is 0.05 to 3.80, the non-woven fabric layer $\beta$ contains short fibers C2 containing a resin having a melting point of 70 to 190°C in an outer surface layer, and a content mass of the short fibers C2 with respect to a total mass of the non-woven fabric layer $\beta$ is 20 to 60% by mass, and the non-woven fabric layer $\alpha$ and the non-woven fabric layer $\beta$ are partially fused. In the present disclosure, the unit "1 tex" = 1 gram per 1 km, respectively the unit "1 dtex" = 1 gram per 10 km.

(2) In the non-woven-fabric layered body for a sound-absorbing material according to (1), the short fibers C1 are core-sheath type composite short fibers, and the resin constituting the sheath part is a thermoplastic resin having a melting point of 135 to 190°C.

(3) In the non-woven-fabric layered body for a sound-absorbing material according to (1) or (2), the short fibers C1 have a fineness of 1.0 to 5.0 dtex.

(4) In the non-woven-fabric layered body for a sound-absorbing material according to any one of (1) to (3), the thermoplastic resin having a melting point of 135 to 190°C is a crystalline resin.

(5) In the non-woven-fabric layered body for a sound-absorbing material according to any one of (1) to (4), the short fibers C2 are core-sheath type composite short fibers, and the resin constituting the sheath part is a thermoplastic resin having a melting point of 70 to 190°C.

(6) In the non-woven-fabric layered body for a sound-absorbing material according to any one of (1) to (5), the thermoplastic resin having a melting point of 70 to 190°C is an amorphous resin.

(7) In the non-woven fabric for a sound-absorbing material according to any one of (1) to (6), the non-woven fabric layer $\alpha$ has a basis weight of 100 g/m$^2$ or more and 700 g/m$^2$ or less, and the non-woven fabric layer $\alpha$ has a thickness of 7 mm or more and 40 mm or less.

(8) In the non-woven fabric for a sound-absorbing material according to any one of (1) to (7), the non-woven fabric layer $\beta$ has a basis weight of 30 g/m$^2$ or more and 120 g/m$^2$ or less.

(9) In the non-woven fabric for a sound-absorbing material according to any one of (1) to (8), the non-woven fabric layer $\beta$ has a tensile elongation at break of 50% or more and a static friction coefficient of 0.5 or less.

(10) In the non-woven-fabric layered body for a sound-absorbing material according to any one of (1) to (9), the short fibers A, the short fibers B, the short fibers C1, and the short fibers C2 are all polyester short fibers.

(11) There is provided a sound-absorbing material using the non-woven-fabric layered body for a sound-absorbing material according to any one of (1) to (10) as a base material and further containing a non-woven fabric layer for a skin γ having an air permeability of 3 to 50 cm³/cm²/s, and the non-woven fabric layer for a skin γ is layered on a surface of the non-woven-fabric layered body for a sound-absorbing material on the non-woven fabric layer α side.

EFFECTS OF THE INVENTION

According to the present invention, it is possible to provide a non-woven fabric for a sound-absorbing material which is excellent in thickness recoverability during molding, is excellent in followability to a body or the like of an automobile having a complicated shape, and is excellent in sound-absorbing performance. Furthermore, it is possible to obtain a sound-absorbing material having a non-woven fabric for a sound-absorbing material as a base material and having a non-woven fabric layer for a skin.

EMBODIMENTS OF THE INVENTION

In a non-woven-fabric layered body for a sound-absorbing material of the present invention, a non-woven fabric layer α and a non-woven fabric layer β are layered. The non-woven fabric layer α contains short fibers A having a fineness of 0.4 to 3.8 dtex and short fibers B having a fineness of 4.0 to 22.0 dtex, the total content mass of the short fibers A and the short fibers B with respect to the total mass of the non-woven fabric layer α is 86 to 98% by mass, and the content mass ratio of the short fibers A and the short fibers B (content mass of short fibers A/content mass of short fibers B) is 0.05 to 3.80. The non-woven fabric layer α further contains short fibers C1 containing a resin having a melting point of 135 to 190°C in the outer surface layer, and the content mass of the short fibers C1 with respect to the total mass of the non-woven fabric layer α is 2 to 14% by mass. The non-woven fabric layer β contains short fibers C2 containing a resin having a melting point of 70 to 190°C in the surface layer, and the content mass of the short fibers C2 with respect to the total mass of the non-woven fabric layer β is 20 to 60% by mass.

In the non-woven fabric layer α, the short fibers A, the short fibers B, and the short fibers C1 are uniformly mixed in a portion that becomes a part of the base material of the sound-absorbing material. Due to the short fibers A being contained, a large number of fine pores are formed, and excellent sound-absorbing performance can be obtained. Further, the short fibers B having a higher fineness than that of the short fibers A form a large number of fine pores, have high rigidity, and contribute to the thickness recoverability during molding processing. By adjusting the content mass ratio of the short fibers A and the short fibers B and uniformly mixing them, the sound-absorbing performance and the thickness recoverability during molding processing are improved.

That is, such a non-woven-fabric layered body for a sound-absorbing material (hereinafter this may be simply referred to as a "non-woven fabric") has the non-woven fabric layer α having the above configuration, and thus has excellent thickness recoverability during molding in heating and compression during molding. In addition, the sound-absorbing material can secure a thickness for exhibiting sound-absorbing performance, and the sound-absorbing performance is excellent due to air friction of the fine porous portion inside the non-woven fabric layer α.

Furthermore, by having the non-woven fabric layer β having the above configuration, it is possible to curb breakage of the non-woven fabric layer due to friction between the non-woven-fabric layered body for a sound-absorbing material and the mold in heating and compression during molding, excellent followability to the mold is obtained, and thus it is possible to mold the non-woven fabric layer into a required shape. In addition, the non-woven fabric layer β may be at least on one surface side of the non-woven fabric layer α, but may be on both surface sides. Since the sound-absorbing material is provided with a skin material, which will be described later, on the other surface side of the non-woven fabric layer α in the molding processing, by having the non-woven fabric layer β on one surface side that comes into contact with the mold, breakage of the non-woven fabric layer can be curbed, excellent followability to the mold is obtained, and thus it is possible to mold the non-woven fabric layer into a required shape.

Here, when the content of the short fibers C1 in the non-woven fabric layer α is increased, the content of the resin contained in the short fibers C1 in the non-woven fabric layer α is increased, and the thickness during molding processing is reduced due to the adhesion action when the resin at 135°C to 190°C is melted and re-solidified, it is thus difficult to obtain thickness recoverability. Therefore, in the present invention, by minimizing the content of the short fibers C1 in the non-woven fabric layer α and increasing the content of the short fibers C2 in the non-woven fabric layer β, a non-woven fabric for a sound-absorbing material having good thickness recoverability during molding processing and excellent sound-absorbing performance can be obtained.

Then, the non-woven fabric layer α and the non-woven fabric layer β are layered, and the interface is partially fused to obtain a non-woven-fabric layered body. The "partial fusion" of the non-woven fabric layer α and the non-woven fabric layer β melts a resin contained in the outer surface layer of the short fibers C2 contained in the non-woven fabric layer β to bind some of the short fibers A, the short fibers B, or the short fibers C1 of the non-woven fabric layer α and some of the short fibers C2 and other short fibers of the non-woven fabric layer β. That is, the resin is obtained by bonding fibers to each other centering on a part where single fibers intersect, and the layered surface is in a partially adhering state rather than entirely adhering.

For the interface between the non-woven fabric layer α and the non-woven fabric layer β, it is important that the layered state of the non-woven fabric layer α and the non-woven fabric layer β do not change during molding processing. When the layered state changes, there is a concern that respective non-woven fabric layers may peel off or a stack may occur during molding processing, and accordingly, it become difficult to maintain sound-absorbing performance. For this reason, in the non-woven fabric layer β, in addition to curbing breakage of the non-woven fabric for a sound-absorbing material due to friction between the non-woven fabric for a sound-absorbing material and the mold in heating and compression during the molding, it is also necessary to maintain the layered state. The short fibers C2 contained in the non-woven fabric layer β bond some of the short fibers of the non-woven fabric layer α and the non-woven fabric layer β to be layered. Therefore, the melting point of the resin contained in the outer surface layer of the short fibers C2 contained in the non-woven fabric layer β is preferably lower than the melting point of the resin contained in the outer surface layer of the short fibers C1.

The non-woven fabric layer α contains short fibers A having a fineness of 0.4 to 3.8 dtex and short fibers B having a fineness of 4.0 to 22.0 dtex. Due to containing the short fibers A having a fineness of 0.4 to 3.8 dtex being contained, a porous portion having a large number of fine pores can be formed inside the non-woven fabric for a sound-absorbing material, and the sound-absorbing performance of the sound-absorbing material using this non-woven fabric is excellent.

By setting the fineness of the short fibers A to 0.4 dtex or more, in the carding process when producing the non-woven fabric layer α, yarn breakage and winding around the card clothing are curbed, the short fibers A uniformly disperse in the non-woven fabric layer α, a porous portion having a large number of fine pores can be formed inside the non-woven fabric layer α, and the sound-absorbing performance when used as a sound-absorbing material is excellent. On the other hand, by setting the fineness of the short fibers A to 3.8 dtex or less, a porous portion having a large number of fine pores can be formed inside the non-woven fabric layer α by the short fibers A having a small fineness. As a result, when sound passes through voids between fibers, that is, the porous portion, the sound can be efficiently converted into heat by air friction with fibers around the voids, and excellent sound absorption performance can be obtained when the non-woven fabric is used as a sound-absorbing material. From the above viewpoint, the fineness of the short fibers A is preferably 0.5 to 2.0 dtex, and more preferably 0.5 to 0.9 dtex.

Since the non-woven fabric layer α included in the non-woven-fabric layered body of the present invention contains the short fibers B having a fineness of 4.0 to 22.0 dtex, the rigidity of the short fibers B can impart thickness recoverability during molding to the non-woven fabric of the present invention. By setting the fineness of the short fibers B to 4.0 dtex or more, the rigidity of the short fibers B can impart thickness recoverability during molding to the non-woven fabric of the present invention. On the other hand, by setting the fineness of the short fibers B to 22.0 dtex or less, a porous portion having a large number of fine pores can be formed inside the non-woven fabric layer α, and the sound-absorbing performance when used as a sound-absorbing material is excellent. From the above viewpoint, the fineness of the short fibers B is preferably 5.0 to 18.0 dtex, and particularly preferably 6.0 to 15.0 dtex.

In the non-woven fabric layer α included in the non-woven-fabric layered body of the present invention, the total content mass of the short fibers A and the short fibers B with respect to the total mass of the non-woven fabric layer α is 86 to 98% by mass, and the content mass ratio of the short fibers A and the short fibers B (content mass of short fibers A/content mass of short fibers B) is 0.05 to 3.80. By setting the total content of the short fibers A and the short fibers B and the content mass ratio thereof within the above ranges, it is possible to achieve both the thickness recoverability during molding and the sound-absorbing performance when used as a sound-absorbing material. By setting the total content mass of the short fibers A and the short fibers B to 86% by mass or more, excessive fusion between fibers due to the short fibers C1, which will be described later, can be suppressed, and the thickness recoverability can be maintained even in heating and compression during molding. As a result, a thickness for exhibiting sound-absorbing performance, that is, a porous portion having fine pores is formed inside the non-woven fabric layer α, and sound-absorbing performance is excellent. On the other hand, when the total content mass of the short fibers A and the short fibers B is 98% by mass or less, the form as the non-woven fabric layer α can be maintained, and the non-woven fabric for a sound-absorbing material can be conveyed and handled during molding processing. Furthermore, it is possible to reduce the number of fibers falling off when the sound-absorbing material is cut. From the above point of view, the total content mass of the short fibers A and the short fibers B is preferably 86 to 97% by mass, and particularly preferably 90 to 97% by mass.

Furthermore, by setting the content mass ratio of the short fibers A and the short fibers B (content mass of the short fibers A/content mass of the short fibers B) to 0.05 to 3.80, it is possible to achieve both the thickness recoverability during molding and the sound-absorbing performance when used as a sound-absorbing material. Since the non-woven fabric layer α is made of a material in which the short fibers A, the short fibers B, and the short fibers C1 are mixed in advance, the non-woven fabric layer α is not a layer having a layer configuration made of specific short fibers but a non-woven fabric in which each constituent fiber uniformly disperses in the non-woven fabric layer $\alpha$.

Therefore, the short fiber A forms a fine porous portion inside the non-woven fabric layer $\alpha$, and plays a role of improving sound-absorbing performance. In addition, the short fibers B play a role of imparting thickness recoverability during molding due to the rigidity thereof. When the content mass ratio of the short fibers A and the short fibers B is 0.05 or more, a fine porous portion can be formed inside the non-woven fabric layer $\alpha$, and the sound-absorbing performance can be improved. On the other hand, by setting the content mass ratio of the short fibers A and the short fibers B to 3.80 or less, the rigidity of the short fibers B can impart thickness recoverability during molding, and the thickness for exhibiting sound-absorbing performance, that is, a porous portion can be formed. In addition, due to the short fibers B having a relatively high fineness being contained at a constant mass ratio, even in a case where the short fibers A have a small fineness, yarn breakage of the short fibers A and winding of the short fibers A around the card clothing are curbed in the carding process, the short fibers A uniformly disperse, a fine porous portion can be formed inside the non-woven fabric layer $\alpha$, and the sound-absorbing performance when used as a sound-absorbing material is excellent. From the above viewpoint, the content mass ratio of the short fibers A to the short fibers B is preferably 0.20 to 2.20, and particularly preferably 0.30 to 1.40.

The non-woven fabric layer $\alpha$ included in the non-woven-fabric layered body of the present invention contains the short fibers C1 containing a resin having a melting point of 135 to 190°C, and the content mass of the short fibers C1 with respect to the total mass of the non-woven fabric layer $\alpha$ is 2 to 14% by mass. By setting the melting point of the resin contained in the short fiber C1 and the content mass of the short fibers C1 within the above ranges, it is possible to achieve all of the thickness recoverability during molding, the conveyance and handling properties of the non-woven fabric for a sound-absorbing material, and further, the number of fibers falling off when the sound-absorbing material is cut being reduced. By setting the melting point of the resin contained in the short fibers C1 to 135°C or higher, in the stage of producing the non-woven fabric layer $\alpha$, the fusion of the constituent fibers of the non-woven fabric layer $\alpha$ by the short fibers C1 can be suppressed, and the thickness recoverability can be maintained even in heating and compression during molding. On the other hand, by setting the melting point of the resin contained in the short fibers C1 to 190°C or lower, in the stage of producing the non-woven fabric layer $\alpha$, by fusing the constituent fibers of the non-woven fabric layer $\alpha$ with the short fibers C1, it is possible to achieve the conveyance and handling properties of the non-woven fabric for a sound-absorbing material, and further, to reduce the number of fibers falling off when the sound-absorbing material is cut. From the above point of view, the melting point of the resin contained in the short fibers C1 is preferably 140 to 180°C, and particularly preferably 145 to 170°C.

In addition, by setting the content mass of the short fibers C1 with respect to the total mass of the non-woven fabric layer $\alpha$ to 2% by mass or more, in the stage of producing the non-woven fabric layer $\alpha$, by fusing the constituent fibers of the non-woven fabric layer $\alpha$ with the short fibers C1, it is possible to achieve the conveyance and handling properties of the non-woven fabric for a sound-absorbing material, and further, to reduce the number of fibers falling off when the sound-absorbing material is cut. On the other hand, by setting the content mass of the short fibers C1 with respect to the total mass of the non-woven fabric layer $\alpha$ to 14% by mass or less, the fusion point between the short fibers C1 and the short fibers A and the fusion point between the short fibers C1 and the short fibers B in heating and compression during molding can be reduced, and the thickness recoverability can be maintained even in heating and compression during molding. From the above point of view, the content mass of the short fibers C1 with respect to the total mass of the non-woven fabric layer $\alpha$ is preferably 3 to 12% by mass, and particularly preferably 3 to 10% by mass.

The non-woven fabric layer $\alpha$ included in the non-woven-fabric layered body of the present invention contains the short fibers C2 containing a resin having a melting point of 70 to 190°C in the outer surface layer, and the content mass of the short fibers C2 with respect to the total mass of the non-woven fabric layer $\beta$ is 20 to 60% by mass. The fibers of the short fibers C2 are not particularly limited, and known fibers can be used, and side-by-side type composite fibers obtained by bonding a low melting point component and a high melting point component, or core-sheath type composite fibers obtained by coating a high melting point component with a low melting point component can be used.

The non-woven fabric layer $\beta$ contains 40 to 80% by mass of other short fibers. As other short fiber materials, thermoplastic resins such as polyester resins, polyamide resins, acrylic resins, and polyolefin resins can be used. Among them, short fibers made of a polyester resin are preferable from the viewpoint of being excellent in heat resistance, that is, being capable of reducing deformation and discoloration of the non-woven fabric for a sound-absorbing material in a high-temperature environment when used in the vicinity of an engine room of an automobile or the like.

By setting the melting point of the resin of the outer surface layer contained in the short fibers C2 and the content mass of the short fibers C2 within the above ranges, the smoothness of the non-woven fabric layer $\beta$ is improved, breakage of the non-woven fabric for a sound-absorbing material due to friction between the non-woven fabric for a sound-absorbing material and the mold during molding can be curbed, and it is possible to mold the non-woven fabric for a sound-absorbing material into a required shape. Furthermore, in the process of producing the non-woven fabric for a sound-absorbing material, the non-woven fabric layer $\alpha$ and the non-woven fabric layer $\beta$ can easily adhere to each other, and productivity can be improved. By setting the melting point of the resin contained in the short fibers C2 to 70°C or higher, in the process of producing the non-woven fabric layer $\beta$, adhesion of the resin having a melting point of 70 to 190°C to the production apparatus can be eliminated, and productivity can be improved. On the other hand, by setting the melting point of the resin contained in the short fibers C2 to 190°C or lower, in the stage of producing the non-woven fabric layer β, by fusing the fibers to each other with the short fibers C2, the smoothness of the non-woven fabric layer β can be improved, and breakage of the non-woven fabric for a sound-absorbing material due to friction between the non-woven fabric for a sound-absorbing material and the mold can be curbed in heating and compression during molding.

It is presumed that the non-woven fabric layer β has a lower basis weight and fewer fluff fibers than the non-woven fabric layer α, and the resin of the outer surface layer of the short fibers C2 melts and closes irregularities of the non-woven fabric surface, and thus the surface becomes smooth. From the above point of view, the melting point of the resin contained in the short fibers C2 is preferably 70 to 180°C, and particularly preferably 70 to 170°C. In addition, by setting the content mass of the short fibers C2 with respect to the total mass of the non-woven fabric layer β to 20% by mass or more, by fusing the fibers to each other with the short fibers C2, the smoothness of the non-woven fabric layer β can be improved, and breakage of the non-woven fabric for a sound-absorbing material due to friction between the non-woven fabric for a sound-absorbing material and the mold can be curbed in heating and compression during molding. Furthermore, in the process of producing the non-woven-fabric layered body for a sound-absorbing material, by fusing the short fibers C2 and the short fibers included in the non-woven fabric layer α, the non-woven fabric layer α and the non-woven fabric layer β can be easily partially fused, and the productivity can be improved. On the other hand, by setting the content mass of the short fibers C2 with respect to the total mass of the non-woven fabric layer β to 60% by mass or less, the tensile elongation at break of the non-woven fabric layer β can be improved, the followability of the non-woven fabric layer β to the mold is improved, and the breakage of the non-woven fabric layer β can be curbed. From the above point of view, the content mass of the short fibers C2 with respect to the total mass of the non-woven fabric layer β is preferably 25 to 50% by mass, and particularly preferably 25 to 40% by mass. In addition, the smoothness can be measured by a static friction coefficient according to JIS P 8147: 1994 3.2 inclination method.

When the static friction coefficient of the surface on the surface side of the non-woven fabric β of the non-woven-fabric layered body exceeds 0.5, the friction between the non-woven fabric for a sound-absorbing material and the mold increases in heating and compression during molding, wrinkles and breakage occur on the surface of the non-woven fabric, and sound-absorbing performance and quality are poor, which is not preferable. Therefore, the static friction coefficient is preferably 0.5 or less.

In addition, the short fibers C1 contained in the non-woven fabric layer α included in the non-woven-fabric layered body of the present invention are preferably core-sheath type composite short fibers, and the resin constituting the sheath part is preferably a resin having a melting point of 135 to 190°C. In addition, the sheath part of the core-sheath type composite short fibers corresponds to the outer surface layer. The short fibers C1 are core-sheath type composite fibers, and the fibers contained in the non-woven fabric layer α can adhere to each other by the adhesion action of the resin contained in the sheath part. In addition, by setting the melting point of the resin constituting the sheath part to 135°C or higher, excessive adhesion between fibers due to the short fibers C1 can be suppressed, and the thickness recoverability can be improved even in heating and compression during molding. On the other hand, by setting the melting point of the resin contained in the sheath part to 190°C or lower, in the stage of producing the non-woven fabric layer α, by fusing the constituent fibers to each other with the short fibers C1, it is possible to achieve the conveyance and handling properties of the non-woven fabric for a sound-absorbing material, and further, to reduce the number of fibers falling off when the sound-absorbing material is cut. From the above point of view, the melting point of the resin constituting the sheath part is preferably 140 to 180°C, and particularly preferably 145 to 170°C.

In addition, the fineness of the short fibers C1 is preferably 1.0 to 5.0 dtex. When the fineness of the short fibers C1 is 1.0 dtex or more, in the carding process when producing the non-woven fabric layer α, yarn breakage of the short fibers C1 and winding of the short fibers C1 around the card clothing are curbed, the short fibers C1 uniformly disperse, the fibers are fused to each other with the short fibers C1, and accordingly, it is possible to achieve the conveyance and handling properties of the non-woven fabric for a sound-absorbing material, and further, to reduce the number of the fibers falling off when the sound-absorbing material is cut. On the other hand, by setting the fineness of the short fibers C1 to 5.0 dtex or less, the fusion point of the short fibers C1 and the short fibers A or B increases, and it is possible to achieve the conveyance and handling properties of the non-woven fabric for a sound-absorbing material, and further, to reduce the number of fibers falling off when the sound-absorbing material is cut. From the above viewpoint, the fineness of the short fibers C1 is preferably 1.4 to 4.0 dtex, and particularly preferably 1.6 to 3.0 dtex.

In addition, the short fibers C1 are preferably core-sheath type composite short fibers, and in a case where the resin constituting the sheath part is a thermoplastic resin having a melting point of 135 to 190°C, a crystalline resin is preferable. By using the crystalline thermoplastic resin as the resin contained in the short fibers C1, even when the content mass of the short fibers C1 with respect to the total mass of the non-woven fabric layer α is as small as 2 to 14% by mass, fusion between the crystalline resin and the short fibers A or B becomes stronger, and it is possible to achieve the conveyance and handling properties of the non-woven fabric for a sound-absorbing material, and further, to reduce the number of fibers falling off when the sound-absorbing material is cut. In addition, since the content mass of the short fibers C1 can be reduced as described above, the fusion point between the short fibers C1 and the short fibers A or B can be reduced in heating and compression during molding, and the thickness recoverability can be maintained even in heating and compression during molding. As such a crystalline resin, a polyester copolymer resin is preferable.

In addition, regarding the crystalline resin in the present invention, a resin having a glass transition point, an exothermic peak (crystallization point) due to crystallization, and an endothermic peak (melting point) due to melting in differential scanning calorimetry is defined as a crystalline resin, and a resin having only at the glass transition point and no endothermic peak (melting point) due to clear melting is defined as an amorphous resin.

Meanwhile, the short fibers C2 are preferably core-sheath type composite short fibers, and the resin constituting the sheath part is preferably a thermoplastic resin having a melting point of 70 to 190°C. In addition, the sheath part of the core-sheath type composite short fibers corresponds to the outer surface layer. The resin constituting the sheath part is preferably a thermoplastic resin having a melting point of 70 to 190°C and an amorphous resin. As such an amorphous resin, a polyester copolymer resin is preferable.

As materials of the short fibers A, the short fibers B, the short fibers C1, and the short fibers C2 of the present invention, thermoplastic resins such as polyester resins, polyamide resins, acrylic resins, and polyolefin resins can be used. Among them, short fibers made of a polyester resin (hereinafter referred to as polyester short fibers) are preferable from the viewpoint of being excellent in heat resistance, that is, being capable of reducing deformation and discoloration of the non-woven fabric for a sound-absorbing material in a high-temperature environment when used in the vicinity of an engine room of an automobile or the like. In addition, the short fibers A and B are preferably short fibers made of a polyethylene terephthalate resin (hereinafter referred to as polyethylene terephthalate short fibers), which are particularly excellent in heat resistance among polyester resins.

The basis weight of the non-woven fabric layer $\alpha$ of the present invention is preferably 100 g/m$^2$ or more and 700 g/m$^2$ or less, and the thickness of the non-woven fabric layer $\alpha$ is preferably 7 mm or more and 40 mm or less. By setting the basis weight of the non-woven fabric layer $\alpha$ to 100 g/m$^2$ or more, the thickness recoverability can be improved even in heating and compression during molding, and many porous portions having fine pores are formed inside the non-woven fabric layer $\alpha$, and accordingly, excellent sound-absorbing performance is obtained. On the other hand, by setting the basis weight of the non-woven fabric layer $\alpha$ to 700 g/m$^2$ or less, a non-woven fabric for a sound-absorbing material having excellent lightweight properties can be obtained. From the above viewpoint, the basis weight of the non-woven fabric layer $\alpha$ is preferably 150 g/m$^2$ or more and 550 g/m$^2$ or less, and particularly preferably 200 g/m$^2$ or more and 400 g/m$^2$ or less. In addition, by setting the thickness of the non-woven fabric layer $\alpha$ to 7 mm or more, the thickness recoverability can be improved even in heating and compression during molding. On the other hand, by setting the thickness of the non-woven fabric layer $\alpha$ to 40 mm or less, it is possible to facilitate transportation of the non-woven fabric for a sound-absorbing material and conveyance efficiency during molding. From the above point of view, the thickness of the non-woven fabric layer $\alpha$ is preferably 10 mm or more and 35 mm or less, and more preferably 15 mm or more and 30 mm or less.

The basis weight of the non-woven fabric layer $\beta$ is preferably 30 g/m$^2$ or more and 120 g/m$^2$ or less. By setting the basis weight of the non-woven fabric layer $\beta$ to 30 g/m$^2$, the smoothness of the non-woven fabric layer B can be improved, and breakage of the non-woven fabric for a sound-absorbing material due to friction between the non-woven fabric for a sound-absorbing material and the mold can be curbed in heating and compression during molding. On the other hand, by setting the basis weight of the non-woven fabric layer $\beta$ to 120 g/m$^2$ or less, a non-woven fabric for a sound-absorbing material having excellent lightweight properties can be obtained. From the above viewpoint, the basis weight of the non-woven fabric layer $\beta$ is preferably 40 g/m$^2$ or more and 100 g/m$^2$ or less, and particularly preferably 45 g/m$^2$ or more and 80 g/m$^2$ or less.

The tensile elongation at break of the non-woven fabric layer $\beta$ is preferably 50% or more. By setting the tensile elongation at break to 50% or more, the followability of the non-woven fabric layer $\beta$ to the mold can be improved, and the breakage of the non-woven fabric layer $\beta$ can be curbed. From the above point of view, the tensile elongation at break is preferably 55% or more, and more preferably 60% or more. As means for improving the tensile elongation at break of the non-woven fabric layer $\beta$, means for improving entanglement between the short fibers contained in the non-woven fabric layer $\beta$ can be adopted by adjusting the content mass of the short fibers C2 as described above or adopting a needle punching process or a spunlace process in the production of the non-woven fabric layer $\beta$. In addition, the tensile elongation at break of the present invention can be measured in accordance with JIS L 1913: 1998 6.3.1, and the average value of the tensile elongation at break in a random direction and the tensile elongation at break in a direction orthogonal to the random direction can be calculated and measured.

Next, a preferable production method for producing the non-woven fabric for a sound-absorbing material of the present invention will be described. A preferable method for producing the non-woven fabric of the present invention includes the following processes.

<Non-woven fabric layer α>

(a) Process of opening short fibers A, short fibers B, and short fibers C1
(b) Process of forming short fibers A, short fibers B, and short fibers C1 into web

<Non-woven fabric layer β>

(c) Process of opening short fibers C2 and other short fibers
(d) Process of forming short fibers C2 and other short fibers into web
(e) Process of entangling short fibers C2 with other short fibers by needle or water flow to obtain non-woven fabric layer β

<Non-woven-fabric layered body for sound-absorbing material>

(f) Process of layering web including short fibers A, short fibers B, and short fibers C1 and non-woven fabric layer β to obtain layered body
(g) Process of melting short fibers C1 with hot air to obtain non-woven fabric layer α, and melting short fibers C2 to fuse non-woven fabric layer α and non-woven fabric layer β

Hereinafter, details of the processes (a) to (g) will be described.

<Non-woven fabric layer α>

First, the process (opener process) (a) of opening the short fibers A, the short fibers B, and the short fibers C1 will be described. In the opener process, the short fibers A, the short fibers B, and the short fibers C1 (hereinafter also referred to as each short fiber) are weighed such that the contents of the short fibers A, the short fibers B, and the short fibers C1 in the non-woven fabric layer α are as desired, and then each short fiber is sufficiently opened and mixed using air or the like.

Next, the process (carding process) (b) of forming the short fibers A, the short fibers B, and the short fibers C1 into a web will be described. In the carding process, each of the mixed short fibers obtained in the opener process are aligned with a card clothing roller to obtain a web. That is, the web is a film-like sheet made only of fibers, and is also called a fleece.

<Non-woven fabric layer β>

In the process (c) of opening the short fibers C2 and the other short fibers, similarly to the process (a), the short fibers C2 and the other short fibers are weighed by the opener process, and then the short fibers are sufficiently opened and mixed using air or the like.

In addition, in the process (d) of forming the short fibers C2 and other short fibers into a web, similarly to the process (b), the mixed each short fiber obtained in the opener process is aligned by the card clothing roller in the carding process to obtain a web.

Next, the process (e) of entanglement short fibers C2 with other short fibers by a needle or a water flow to obtain the non-woven fabric layer β (entanglement process) will be described. In the entanglement process, entanglement of short fibers with each other is performed by a mechanical entanglement method using a needle punch method or a water jet punch method (hydroentanglement method). In such an entanglement process, by entangling the short fibers C2 with other short fibers, the tensile elongation at break of the non-woven fabric layer β can be improved, the followability of the non-woven fabric layer β to the mold can be improved, and breakage of the non-woven fabric layer β can be curbed. As the entanglement process, a needle punch method can be preferably employed from the viewpoint of productivity among the above two types. Preferably, by setting the needle density to 30 to 300 needles/$cm^2$, the tensile elongation at break of the non-woven fabric layer β can be improved, the followability of the non-woven fabric layer β to the mold can be improved, and breakage of the non-woven fabric layer β can be curbed. By setting the needle density to 30 needles/$cm^2$ or more, it is possible to impart entanglement to the non-woven fabric layer β and improve the tensile elongation at break. On the other hand, by setting the needle density to 300 needles/cm$^2$ or less, it is possible to curb the yarn breakage of the short fibers by the needle and to improve the tensile elongation at break. In this respect, the needle density is preferably 50 to 200 needles/cm$^2$, and particularly preferably 50 to 150 needles/cm$^2$.

<Non-woven-fabric layered body for sound-absorbing material>

In the process (f) of layering a web containing the short fibers A, the short fibers B, and the short fibers C1 and the non-woven fabric layer β to obtain a layered web, a method of layering the non-woven fabric layer β while producing a web containing the short fibers A, the short fibers B, and the short fibers C1 is preferably employed.

In the process (g) of melting the short fibers C1 with hot air to obtain the non-woven fabric layer α, and melting the short fibers C2 to fuse the non-woven fabric layer α and the non-woven fabric layer β, the non-woven fabric layer α can be obtained by causing hot air at 150 to 220°C to flow through the layered body from the thickness direction by the thermal bonding method to melt the short fibers C1, and by fusing the non-woven fabric layer α and the non-woven fabric layer β by melting the short fibers C2, the non-woven fabric for a sound-absorbing material of the present invention can be efficiently produced.

Next, the sound-absorbing material will be described. Preferably, a sound-absorbing material containing the non-woven-fabric layered body for a sound-absorbing material of the present invention contains the non-woven-fabric layered body for a sound-absorbing material of the present invention and a non-woven fabric for a skin having an air permeability of 3 to 50 cm$^3$/cm$^2$/s as a skin material, and the non-woven fabric for a skin is layered on a surface side of the non-woven fabric layer α of the non-woven fabric for a sound-absorbing material. Then, the sound-absorbing material having the configuration of skin material/non-woven fabric layer α/non-woven fabric layer β is installed such that the sound incident side becomes the skin material, and accordingly, the sound-absorbing performance of the sound-absorbing material is excellent. By setting the air permeability of the skin material to 3 cm$^3$/cm$^2$/s or more, sound enters the inside of the sound-absorbing material, and the sound-absorbing performance can be improved by air friction of the skin material and air friction of the non-woven fabric for a sound-absorbing material. On the other hand, when the air permeability of the skin material is 35 cm$^3$/cm$^2$/s or less, sound-absorbing performance can be improved by resonance between membrane vibration of the skin material and air vibration of the fine porous portion of the non-woven fabric for a sound-absorbing material, which is preferable. From the above point of view, the air permeability of the skin material is preferably 4 to 40 cm$^3$/cm$^2$/s, and particularly preferably 5 to 30 cm$^3$/cm$^2$/s. In addition, the air permeability of the skin material is measured according to JIS L 1096-1999 8.27.1, Method A (Frazier method).

In addition, the preferable configuration as the sound-absorbing material is as described above, but in addition to the non-woven fabric for a skin having the specific air permeability described above, a general needle punch non-woven fabric, a spunlace non-woven fabric, a spunbond non-woven fabric, a melt blown non-woven fabric, a woven or knitted fabric, a fiber board, or a foam can be layered on the surface of the non-woven fabric layer α of the non-woven fabric for a sound-absorbing material and used as a sound-absorbing material as long as the effect of the skin material by the air friction or the resonance action can be obtained.

EXAMPLES

Hereinafter, evaluation methods and measurement methods used in the present examples will be described.

(1) Measurement of contents of each short fiber constituting non-woven-fabric layered body for sound-absorbing material

The non-woven fabric layer α and the non-woven fabric layer β were separated, and regarding each non-woven fabric, based on JIS L 1030-1: 2006 "Method for Testing Mixing Ratio of Textile Product - Part 1: Differentiation of Fiber" and JIS L 1030-2: 2005 "Method for Testing Mixing Ratio of Textile Product - Part 2: Fiber Mixing Ratio", the corrected weight mixing ratio (mass ratio of each fiber in the standard state) was measured and used as the content (% by mass) of each fiber constituting the non-woven-fabric layered body for a sound-absorbing material. Thus, the fiber materials constituting the non-woven fabric layer α and the non-woven fabric β of the non-woven-fabric layered body for a sound-absorbing material and the contents (% by mass) thereof were specified.

(2) Measurement of fineness and content mass of fibers constituting non-woven-fabric layered body for sound-absorbing material

With respect to the residual non-woven fabric of each of the non-woven fabric layer α and the non-woven fabric layer β in "6. Dissolution Method" in JIS L 1030-2: 2005 "Method for Testing Mixing Ratio of Textile Product - Part 2: Fiber Mixing Ratio" of the above (1), a cross section thereof was observed with a scanning electron microscope (SEM) (S-3500 N type manufactured by Hitachi High-Tech Corporation), observation ranges at 30 parts were randomly extracted, and a cross-sectional photograph was collected at a magnification of 1000 times. Further, the diameters of single fibers were measured for all the fibers present in the cross-sectional photograph. At this time, fibers that were fused and fibers that were not fused in the cross-sectional photograph were distinguished. The measurement is performed on fibers that were not fused. In addition, in a case where the cross-sectional shape of the fibers was a modified cross-sectional shape, the cross-sectional area of the fiber was measured from the cross-sectional photograph, and the cross-sectional area was converted into a perfect circle diameter to obtain the single fiber diameter of the fibers. Among the obtained data, single fiber diameter data of fibers that were not fused was distinguished for each section of 0.1 um, and the average single fiber diameter for each section and the number of fibers for each section were tabulated. From the obtained average single fiber diameter for each section and the specific gravity of each fiber specified in the above (1), the fineness of the fibers for each section was calculated by Formula (1).

$$\text{fineness (dtex)} = (\text{average single fiber diameter } (\mu m) /2)^2 \times 3.14 \times \text{specific gravity of fiber}/100 \qquad \text{Formula (1).}$$

For the non-woven fabric layer $\alpha$, regarding the fibers having a fineness of 0.4 to 3.8 dtex, the content mass (% by mass) of fibers having a fineness of 0.4 to 3.8 dtex was calculated by Formula (2) from the fineness of fibers in each section, the number of fibers in each section, and the specific gravity of the fiber material. fibers in same section (fibers))/(fineness (dtex) of fibers

$$\text{content mass (\% by mass) of fiber having fineness of 0.4 to 3.8 dtex} = ((\text{fineness (dtex) of fibers}$$
having fineness of 0.4 to 3.8 dtex in each section $\times$ number of fibers in same section (fibers))/
(fineness (dtex) of fibers having fineness other than 0.4 to 3.8 dtex in each section $\times$ number of fibers in same section (fibers)) $\times$ 100 $\qquad$ Formula (2).

Similarly, the content mass (% by mass) of fibers having a fineness of 4.0 to 22.0 dtex was obtained. In addition, the fineness and the content mass (% by mass) of the fiber that were fused were obtained in the same manner. Similarly, for the non-woven fabric layer $\beta$, fibers that were fused and fibers that were not fused are distinguished, and the measurement is performed on fibers that were not used. The fineness and the content mass (% by mass) of each fiber were obtained.

In addition, in a case where the non-woven fabric layer $\alpha$ or the non-woven fabric layer $\beta$ constituting the non-woven fabric for a sound-absorbing material had a plurality of fiber materials, the above measurement of the fineness and the content was performed for each fiber material using the residual non-woven fabric in the dissolution method to obtain the fineness and the content of the fibers constituting the non-woven fabric for a sound-absorbing material.

(3) Measurement of melting point of short fibers

Each of the non-woven fabric layer $\alpha$ and the non-woven fabric layer $\beta$ was measured at a temperature rising rate of 10°C/min under a nitrogen stream using "Shimadzu Differential Scanning Calorimeter: DSC-60" manufactured by Shimadzu Corporation, and the obtained melting endothermic peak temperature (°C) of the DSC curve was used as the melting point (°C) of the short fibers of respective non-woven fabric layers constituting the non-woven-fabric layered body for a sound-absorbing material. The non-woven fabric layer $\alpha$ and the non-woven fabric layer $\beta$ contained a plurality of short fibers, and each peak was used as the melting point of the short fibers constituting each non-woven fabric layer. In addition, when the resin was amorphous and a melting endothermic peak could not be confirmed by DSC, the melting start temperature and the melting end temperature were observed at a temperature rising rate of 10°C/min using a melting point microscope, and the melting point was obtained by Formula (3).

$$\text{Melting point (°C)} = (\text{melting start temperature (°C)} + \text{melting end temperature (°C)}/2 \qquad \text{Formula (3)}$$

(4) Measurement of basis weight of non-woven fabric layer $\alpha$, non-woven fabric layer $\beta$, and non-woven-fabric layered body for sound-absorbing material

The basis weight was measured based on JIS L 1913: 1998 6.2. The non-woven fabric layer $\alpha$ and the non-woven fabric layer $\beta$ were separated from the non-woven fabric for a sound-absorbing material, and 3 test pieces of 200 mm $\times$ 200 mm were collected from each sample. The mass of the test piece in the standard state was measured, the basis weight, which is the mass per unit area, was obtained by Formula (4), and the average value was calculated for each of the non-woven fabric layer $\alpha$ and the non-woven fabric layer $\beta$.

$$ms = m/S \qquad \text{Formula (4)}$$

ms: Mass per unit area (g/m$^2$)
m: Average mass (g) of test piece of non-woven fabric layer $\alpha$ or non-woven fabric layer $\beta$
S: Area (m$^2$) of test piece of non-woven fabric layer $\alpha$ or non-woven fabric layer $\beta$

In addition, the basis weight of the non-woven fabric for a sound-absorbing material was the total basis weight of the non-woven fabric layer $\alpha$ and the non-woven fabric layer $\beta$.

(5) Measurement of thickness of non-woven fabric layer $\alpha$, non-woven fabric layer $\beta$, and non-woven fabric for sound-absorbing material

The non-woven fabric layer $\alpha$ and the non-woven fabric layer $\beta$ were separated from the sample of the non-woven fabric for a sound-absorbing material, and 5 test pieces of 200 mm × 200 mm were collected. A ruler was applied to the cross section of the test piece, and the thicknesses of the non-woven fabric layer $\alpha$ and the non-woven fabric layer $\beta$ were measured. The measurement was performed on each test piece (5 test pieces), and an average value thereof was calculated. In addition, the thickness of the non-woven fabric for a sound-absorbing material was measured as described above without separating the non-woven fabric layer $\alpha$ and the non-woven fabric layer $\beta$.

(6) Measurement of tensile elongation at break of non-woven fabric layer $\beta$

The tensile elongation at break was measured based on JIS L 1913: 1998 6.3.1. The non-woven fabric layer $\beta$ was separated from the non-woven fabric for a sound-absorbing material, and 5 test pieces having a width of 50 mm and a length of 200 mm were collected in one random direction.
In addition, 5 test pieces having a width of 50 mm and a length of 200 mm were collected in a direction perpendicular to the one random direction. With respect to the obtained test piece (10 pieces in total), a load was applied until the test piece was ruptured under the conditions of a grip interval of 100 mm and a tensile speed of 200 mm/min using a constant-speed extension type tensile tester, and the tensile elongation at break (%) at rupture was measured. The measurement was performed on the 10 test pieces, and an average value thereof was calculated. As the evaluation, the higher the tensile elongation at break, the better the molding followability.

(7) Measurement of static friction coefficient of non-woven fabric for sound-absorbing material

The static friction coefficient was measured based on JIS P8147: 1994 3.2 inclination method. 5 test pieces having a width of 250 mm and a length of 100 mm were collected from the non-woven fabric for a sound-absorbing material in any one direction. In addition, 5 test pieces having a width of 250 mm and a length of 100 mm were collected in a direction perpendicular to the one random direction. For the obtained test piece (10 pieces in total), the test piece was attached to the inclined plate of the slip inclination angle measuring apparatus such that the long side of the test piece and the long side of the inclined plate were parallel to each other and the non-woven fabric layer $\beta$ was on the upper surface. Next, a metal weight (width of 60 mm, length of 100 mm, mass of 1000 g) was placed on the test piece such that the long side of the test piece was parallel to the long side of the weight.
In the measurement, the inclined plate was inclined under the condition of an inclination angle of less than 3°/sec, the inclination angle when the weight dropped was read, and the value of the tangent ($\tan\theta$) of the inclination angle was collected as the static friction coefficient. The measurement was performed on the 10 test pieces, and an average value thereof was calculated. As an evaluation, the smaller the value of the static friction coefficient, the better the smoothness.

(8) Evaluation of thickness recoverability during molding of non-woven fabric for sound-absorbing material

From the non-woven fabric for a sound-absorbing material, 5 test pieces having a width of 500 mm, a length of 500 mm, and a thickness of 30 mm (a thickness of 25 mm in Comparative Example 12) were collected in any one direction. The end portion of the test piece was fixed with a clamp, and the upper surface and the lower surface of the test piece were heated with a far infrared heater heated to 220°C until the internal temperature of the non-woven fabric for a sound-absorbing material reached 150°C. Then, the heated test piece was rapidly moved and pressed between metal plates having a temperature of 20°C and a size of 400 × 400 mm under the conditions of a pressure of 800 kPa and a time of 60 seconds. The pressed test piece was cut into a size of 300 × 300 mm, a metal ruler was applied to the cross section of the test piece, and the thickness (mm) immediately after pressing was measured. The measurement was performed on 5 test pieces, and an average value obtained by dividing the measured value by the thickness (mm) before pressing was calculated. The larger the value is, the better the thickness recoverability during molding.

(9) Evaluation of fiber fall-off amount during cutting of non-woven fabric for sound-absorbing material

The center of the pressed test piece (300 × 300 mm) prepared in the above (8) was cut using cutting scissors to have a cutting length of 300 mm, the entire amount of fallen fibers was collected, and the mass (mg) thereof was measured with an electronic balance, and converted to have a cutting length of 1 m according to the following Formula (5) to obtain a fiber fall-off amount (mg/m) during cutting. The measurement was performed on 5 test pieces, an average value was calculated, and the test pieces were cut. The smaller the value of the fiber fall-off amount during the cutting, the less the fiber fall-off during cutting, which is excellent.

fiber fall-off amount during cutting (mg/m) = mass of fallen fiber (mg)/cutting length (m) Formula (5).

(10) Measurement of normal incidence sound absorption coefficient of sound-absorbing material

The normal incidence sound absorption coefficient was measured according to the normal incidence sound absorption measurement method (tube method) of JIS A 1405 (1998). From the pressed test piece (300 × 300 mm) prepared in the above (8), 3 circular test pieces 1 having a diameter of 92 mm were collected. Subsequently, 3 circular test pieces 2 having a diameter of 92 mm were collected from a non-woven fabric for a skin (basis weight: 250 g/m², thickness: 1.4 mm, Frazier permeability: 24 cm³/cm²/s) composed of 0.9 dtex polyethylene terephthalate (PET) short fibers (40% by mass) and 2.2 dtex polyethylene terephthalate (PET) short fibers (60% by mass). Further, the test piece 2 was layered on the surface of the non-woven fabric layer $\alpha$ of the test piece 1.

As the test apparatus, an automatic normal incidence sound absorption coefficient measuring device (model 10041A) manufactured by Electronic Measuring Instruments was used. The test piece was attached to one end of an impedance tube for measurement such that the test piece 2 was on the sound incident side, and the normal incidence sound absorption coefficient was measured. As for the sound absorption coefficient for each frequency, a value obtained by multiplying the sound absorption coefficient obtained in the measurement by 100 was adopted. Then, the obtained average value of sound absorption coefficient at 1000 Hz was used as the low-frequency sound absorption coefficient (%), and the obtained average value of sound absorption coefficient at 2000 Hz was used as the high-frequency sound absorption coefficient (%).

<Example 1>

In Example 1, the following non-woven-fabric layered body was used.

(Non-woven fabric layer $\alpha$)

Using 35% by mass of short fibers of polyethylene terephthalate (PET) having a fineness of 0.6 dtex and a melting point of 255°C as the short fibers A, 60% by mass of short fibers of polyethylene terephthalate (PET) having a fineness of 6.6 dtex and a melting point of 255°C as the short fibers B, and 5% by mass of core-sheath short fibers (core-sheath ratio of 1 : 1) having a fineness of 2.2 dtex and made of polyethylene terephthalate (PET) with a melting point of 255°C in the core part and crystalline copolymerized polyester with a melting point of 160°C in the sheath part as the short fibers C1, each short fiber was subjected to an opener process, and then subjected to a carding process to obtain a web.

(Non-woven fabric layer $\beta$)

Using 70% by mass of short fibers of polyethylene terephthalate (PET) having a fineness of 6.6 dtex and a melting point of 255°C as the short fibers, and 30% by mass of core-sheath short fibers (core-sheath ratio of 1 : 1) having a fineness of 4.4 dtex and made of polyethylene terephthalate (PET) with a melting point of 255°C in the core part and amorphous copolymerized polyester with a melting point of 110°C in the sheath part as the short fibers C2, each short fiber was subjected to an opener process, then subjected to a carding process, and then subjected to a needle punch process (needle density of 100 needles/cm²) to obtain a needle punch non-woven fabric.

(Non-woven-fabric layered body for sound-absorbing material)

The web of the non-woven fabric layer $\beta$ and the needle punch non-woven fabric of the non-woven fabric layer $\beta$ were layered, and subjected to a thermal bonding process (hot air temperature: 180°C) to obtain a non-woven-fabric layered body for a sound-absorbing material having a thickness of 30 mm from the non-woven fabric layer $\alpha$ having a content mass of the short fibers A and the short fibers B of 95% by mass, the content mass ratio of the short fibers A and the short fibers B of 0.58, the basis weight of 300 g/m², and the thickness of 25 mm, and the non-woven fabric layer β having a basis weight of 60 g/m² and the thickness of 5 mm.

In the non-woven-fabric layered body for a sound-absorbing material of Example 1, the tensile elongation at break of the non-woven fabric layer β was high, the followability was excellent, the static friction coefficient of the non-woven fabric for a sound-absorbing material was low, and the smoothness was excellent. In addition, the thickness after pressing was large, the thickness recoverability during molding was excellent, and the fiber fall-off amount during cutting was small, which is good. Furthermore, the layered non-woven fabric for a sound-absorbing material had a high low-frequency sound absorption coefficient and a high high-frequency sound absorption coefficient.

<Example 2>

A non-woven fabric for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m², and a thickness of 25 mm, and the non-woven fabric layer β having a basis weight of 60 g/m² and a thickness of 5 mm under the same processes and conditions as in Example 1 except that the short fibers A of the non-woven fabric layer α were changed to short fibers of polyethylene terephthalate (PET) having a fineness of 2.2 dtex and a melting point of 255°C. The configuration and evaluation results of the non-woven fabric for a sound-absorbing material of Example 2 are shown in Table 1.

<Example 3>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m², and a thickness of 25 mm, and the non-woven fabric layer β having a basis weight of 60 g/m² and a thickness of 5 mm under the same processes and conditions as in Example 1 except that the short fibers A of the non-woven fabric layer α were changed to short fibers of polyethylene terephthalate (PET) having a fineness of 3.3 dtex and a melting point of 255°C. The configuration and evaluation results of the non-woven fabric for a sound-absorbing material are shown in Table 1.

<Example 4>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m², and a thickness of 25 mm, and the non-woven fabric layer β having a basis weight of 60 g/m² and a thickness of 5 mm under the same processes and conditions as in Example 1 except that the short fibers B of the non-woven fabric layer α were changed to short fibers of polyethylene terephthalate (PET) having a fineness of 14.4 dtex and a melting point of 255°C. The configuration and evaluation results of the non-woven fabric for a sound-absorbing material are shown in Table 1.

<Example 5>

A non-woven-fabric layered body for a sound-absorbing material was obtained from the non-woven fabric layer α having a content mass of the short fibers A and the short fibers B of 98% by mass, a content mass ratio of the short fibers A and the short fibers B of 0.58, a basis weight of 300 g/m², and a thickness of 25 mm, and the non-woven fabric layer β having a basis weight of 60 g/m² and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 36% by mass, 62% by mass, and 2% by mass. The configuration and evaluation results of the non-woven fabric for a sound-absorbing material are shown in Table 1.

<Example 6>

A non-woven-fabric layered body for a sound-absorbing material was obtained from the non-woven fabric layer α having a content mass of the short fibers A and the short fibers B of 92% by mass, a content mass ratio of the short fibers A and the short fibers B of 0.59, a basis weight of 300 g/m², and a thickness of 25 mm, and the non-woven fabric layer β having a basis weight of 60 g/m² and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 34% by mass, 58% by mass, and 8% by mass.

The configuration and evaluation results of the non-woven fabric for a sound-absorbing material are shown in Table 1.

<Example 7>

A non-woven-fabric layered body for a sound-absorbing material was obtained from the non-woven fabric layer α having a content mass of the short fibers A and the short fibers B of 88% by mass, a content mass ratio of the short fibers A and the short fibers B of 0.57, a basis weight of 300 g/m², and a thickness of 25 mm, and the non-woven fabric layer β having a basis weight of 60 g/m² and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 32% by mass, 56% by mass, and 12% by mass. The configuration and evaluation results of the non-woven fabric for a sound-absorbing material are shown in Table 2.

<Example 8>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.19, a basis weight of 300 g/m², and a thickness of 25 mm, and the non-woven fabric layer β having a basis weight of 60 g/m² and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 15% by mass, 80% by mass, and 5% by mass. The configuration and evaluation results of the non-woven fabric for a sound-absorbing material are shown in Table 2.

<Example 9>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 1.11, a basis weight of 300 g/m², and a thickness of 25 mm, and the non-woven fabric layer β having a basis weight of 60 g/m² and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 50% by mass, 45% by mass, and 5% by mass. The configuration and evaluation results of the non-woven fabric for a sound-absorbing material are shown in Table 2.

<Example 10>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 1.71, a basis weight of 300 g/m², and a thickness of 25 mm, and the non-woven fabric layer β having a basis weight of 60 g/m² and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 60% by mass, 35% by mass, and 5% by mass. The configuration and evaluation results of the non-woven fabric for a sound-absorbing material are shown in Table 2.

<Example 11>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m², and a thickness of 25 mm, and the non-woven fabric layer β having a basis weight of 60 g/m² and a thickness of 5 mm under the same processes and conditions as in Example 1 except that the short fibers C1 of the non-woven fabric layer α were changed to core-sheath short fibers (core-sheath ratio of 1 : 1) having a fineness of 2.2 dtex and made of polyethylene terephthalate (PET) with a melting point of 255°C in the core part and crystalline copolymerized polyester with a melting point of 140°C in the sheath part. The configuration and evaluation results of the non-woven fabric for a sound-absorbing material are shown in Table 2.

<Example 12>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers C1 of the non-woven fabric layer α were changed to core-sheath short fibers (core-sheath ratio of 1 : 1) having a fineness of 2.2 dtex and made of polyethylene terephthalate (PET) with a melting point of 255°C in the core part and crystalline copolymerized polyester with a melting point of 150°C in the sheath part. The configuration and evaluation results of the non-woven fabric for a sound-absorbing material are shown in Table 2.

<Example 13>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers C1 of the non-woven fabric layer α were changed to core-sheath short fibers (core-sheath ratio of 1 : 1) having a fineness of 2.2 dtex and made of polyethylene terephthalate (PET) with a melting point of 255°C in the core part and crystalline copolymerized polyester with a melting point of 175°C in the sheath part. The configuration and evaluation results of the non-woven fabric for a sound-absorbing material are shown in Table 3.

<Example 14>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers C1 of the non-woven fabric layer α were changed to core-sheath short fibers (core-sheath ratio of 1 : 1) having a fineness of 2.2 dtex and made of polyethylene terephthalate (PET) with a melting point of 255°C in the core part and amorphous copolymerized polyester with a melting point of 160°C in the sheath part. The configuration and evaluation results of the non-woven fabric for a sound-absorbing material are shown in Table 3.

<Example 15>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers of polyethylene terephthalate (PET) having a fineness of 6.6 dtex and a melting point of 255°C were used as the short fibers of the non-woven fabric layer β, the short fibers C2 of Example 1 were used as the short fibers C2, and each content mass of these short fibers was changed to 60% by mass and 40% by mass. The configuration and evaluation results of the non-woven fabric for a sound-absorbing material are shown in Table 3.

<Example 16>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers of polyethylene terephthalate (PET) having a fineness of 6.6 dtex and a melting point of 255°C were used as the short fibers of the non-woven fabric layer β, the short fibers C2 of Example 1 were used as the short fibers C2, and each content mass of these short fibers was changed to 50% by mass and 50% by mass. The configuration and evaluation results of the non-woven fabric for a sound-absorbing material are shown in Table 3.

<Example 17>

A non-woven-fabric layered body for a sound-absorbing material was obtained from the non-woven fabric layer

$\alpha$ having a content mass of the short fibers A and the short fibers B of 95% by mass, a content mass ratio of the short fibers A and the short fibers B of 0.58, a basis weight of 250 g/m$^2$, and a thickness of 25 mm, and the non-woven fabric layer $\beta$ having a basis weight of 60 g/m$^2$ and a thickness of 5 mm under the same processes and conditions as in Example 1 except that the basis weight of the non-woven fabric layer $\alpha$ was changed to 250 g/m$^2$. The configuration and evaluation results of the non-woven fabric for a sound-absorbing material are shown in Table 3.

<Example 18>

A non-woven-fabric layered body for a sound-absorbing material was obtained from the non-woven fabric layer $\alpha$ having a content mass of the short fibers A and the short fibers B of 95% by mass, a content mass ratio of the short fibers A and the short fibers B of 0.58, a basis weight of 200 g/m$^2$, and a thickness of 25 mm, and the non-woven fabric layer $\beta$ having a basis weight of 60 g/m$^2$ and a thickness of 5 mm under the same processes and conditions as in Example 1 except that the basis weight of the non-woven fabric layer $\alpha$ was changed to 200 g/m$^2$. The configuration and evaluation results of the non-woven fabric for a sound-absorbing material are shown in Table 3.

[Table 1]

| | | | | Unit | Example 1 | Example 2 | Example 3 | Example 4 | Example 5 | Example 6 |
|---|---|---|---|---|---|---|---|---|---|---|
| Non-woven fabric layer α | Short fibers A | | Materials | – | PET | PET | PET | PET | PET | PET |
| | | | Melting point | °C | 255 | 255 | 255 | 255 | 255 | 255 |
| | | | Fineness | dtex | 0.6 | 2.2 | 3.3 | 0.6 | 0.6 | 0.6 |
| | | | Content mass | % by mass | 35 | 35 | 35 | 35 | 36 | 34 |
| | Short fibers B | | Materials | – | PET | PET | PET | PET | PET | PET |
| | | | Melting point | °C | 255 | 255 | 255 | 255 | 255 | 255 |
| | | | Fineness | dtex | 6.6 | 6.6 | 6.6 | 14.4 | 6.6 | 6.6 |
| | | | Content mass | % by mass | 60 | 60 | 60 | 60 | 62 | 58 |
| | Short fibers C1 | | Forms | – | Core-sheath | Core-sheath | Core-sheath | Core-sheath | Core-sheath | Core-sheath |
| | | Core part | Materials | – | PET | PET | PET | PET | PET | PET |
| | | Sheath part | | | Crystalline copolymerized polyester | Crystalline copolymerized polyester | Crystalline copolymerized polyester | Crystalline copolymerized polyester | Crystalline copolymerized polyester | Crystalline copolymerized polyester |
| | | Core part | Melting point | °C | 255 | 255 | 255 | 255 | 255 | 255 |
| | | Sheath part | | | 160 | 160 | 160 | 160 | 160 | 160 |
| | | | Fineness | dtex | 2.2 | 2.2 | 2.2 | 2.2 | 2.2 | 2.2 |
| | | | Content mass | % by mass | 5 | 5 | 5 | 5 | 2 | 8 |
| | Content mass of short fibers A and short fibers B | | | % by mass | 95 | 95 | 95 | 95 | 98 | 92 |
| | Content mass ratio of short fibers A and short fibers B (Content mass of short fibers A/Content mass of short fibers B) | | | – | 0.58 | 0.58 | 0.58 | 0.58 | 0.58 | 0.59 |
| | Basis weight | | | g/m² | 300 | 300 | 300 | 300 | 300 | 300 |
| | Thickness | | | mm | 25 | 25 | 25 | 25 | 25 | 25 |
| Non-woven fabric layer β | Other short fibers | | Materials | – | PET | PET | PET | PET | PET | PET |
| | | | Melting point | °C | 255 | 255 | 255 | 255 | 255 | 255 |
| | | | Fineness | dtex | 6.6 | 6.6 | 6.6 | 6.6 | 6.6 | 6.6 |
| | | | Content mass | % by mass | 70 | 70 | 70 | 70 | 70 | 70 |
| | Short fibers C2 | | Forms | – | Core-sheath | Core-sheath | Core-sheath | Core-sheath | Core-sheath | Core-sheath |
| | | Core part | Materials | – | PET | PET | PET | PET | PET | PET |
| | | Sheath part | | | Amorphous copolymerized polyester | Amorphous copolymerized polyester | Amorphous copolymerized polyester | Amorphous copolymerized polyester | Amorphous copolymerized polyester | Amorphous copolymerized polyester |
| | | Core part | Melting point | °C | 255 | 255 | 255 | 255 | 255 | 255 |
| | | Sheath part | | | 110 | 110 | 110 | 110 | 110 | 110 |
| | | | Fineness | dtex | 4.4 | 4.4 | 4.4 | 4.4 | 4.4 | 4.4 |
| | | | Content mass | % by mass | 30 | 30 | 30 | 30 | 30 | 30 |
| | Basis weight | | | g/m² | 60 | 60 | 60 | 60 | 60 | 60 |
| | Thickness | | | mm | 5 | 5 | 5 | 5 | 5 | 5 |
| | Tensile elongation at break (followability) | | | % | 65 | 65 | 65 | 65 | 65 | 65 |
| Physical properties of non-woven fabric for sound-absorbing material | Basis weight | | | g/m² | 360 | 360 | 360 | 360 | 360 | 360 |
| | Thickness | | | mm | 30 | 30 | 30 | 30 | 30 | 30 |
| | Static friction coefficient (smoothness) | | | – | 0.45 | 0.45 | 0.45 | 0.45 | 0.45 | 0.45 |
| | Thickness after pressing | | | mm | 17 | 18 | 18 | 20 | 21 | 15 |
| | Thickness recoverability during molding | | | % | 57 | 60 | 60 | 67 | 70 | 50 |
| | Fiber fall-off amount during cutting | | | mg/m | 10 | 9 | 9 | 10 | 24 | 6 |
| | Low-frequency sound absorption coefficient (1000 Hz) | | | % | 73 | 64 | 62 | 70 | 78 | 62 |
| | High-frequency sound absorption coefficient (2000 Hz) | | | % | 92 | 94 | 97 | 95 | 91 | 97 |

[Table 2]

| | | | Unit | Example 7 | Example 8 | Example 9 | Example 10 | Example 11 | Example 12 |
|---|---|---|---|---|---|---|---|---|---|
| Non-woven fabric layer α | Short fibers A | Materials | – | PET | PET | PET | PET | PET | PET |
| | | Melting point | °C | 255 | 255 | 255 | 255 | 255 | 255 |
| | | Fineness | dtex | 0.6 | 0.6 | 0.6 | 0.6 | 0.6 | 0.6 |
| | | Content mass | % by mass | 32 | 15 | 50 | 60 | 35 | 35 |
| | Short fibers B | Materials | – | PET | PET | PET | PET | PET | PET |
| | | Melting point | °C | 255 | 255 | 255 | 255 | 255 | 255 |
| | | Fineness | dtex | 6.6 | 6.6 | 6.6 | 6.6 | 6.6 | 6.6 |
| | | Content mass | % by mass | 56 | 80 | 45 | 35 | 60 | 60 |
| | Short fibers C1 | Forms | – | Core-sheath | Core-sheath | Core-sheath | Core-sheath | Core-sheath | Core-sheath |
| | | Materials — Core part | – | PET | PET | PET | PET | PET | PET |
| | | Materials — Sheath part | | Crystalline copolymerized polyester | Crystalline copolymerized polyester | Crystalline copolymerized polyester | Crystalline copolymerized polyester | Crystalline copolymerized polyester | Crystalline copolymerized polyester |
| | | Melting point — Core part | °C | 255 | 255 | 255 | 255 | 255 | 255 |
| | | Melting point — Sheath part | | 160 | 160 | 160 | 160 | 140 | 150 |
| | | Fineness | dtex | 2.2 | 2.2 | 2.2 | 2.2 | 2.2 | 2.2 |
| | | Content mass | % by mass | 12 | 5 | 5 | 5 | 5 | 5 |
| | Content mass of short fibers A and short fibers B | | % by mass | 88 | 95 | 95 | 95 | 95 | 95 |
| | Content mass ratio of short fibers A and short fibers B (Content mass of short fibers A/Content mass of short fibers B) | | – | 0.57 | 0.19 | 1.11 | 1.71 | 0.58 | 0.58 |
| | Basis weight | | g/m$^2$ | 300 | 300 | 300 | 300 | 300 | 300 |
| | Thickness | | mm | 25 | 25 | 25 | 25 | 25 | 25 |
| Non-woven fabric layer β | Other short fibers | Materials | – | PET | PET | PET | PET | PET | PET |
| | | Melting point | °C | 255 | 255 | 255 | 255 | 255 | 255 |
| | | Fineness | dtex | 6.6 | 6.6 | 6.6 | 6.6 | 6.6 | 6.6 |
| | | Content mass | % by mass | 70 | 70 | 70 | 70 | 70 | 70 |
| | Short fibers C2 | Forms | – | Core-sheath | Core-sheath | Core-sheath | Core-sheath | Core-sheath | Core-sheath |
| | | Materials — Core part | – | PET | PET | PET | PET | PET | PET |
| | | Materials — Sheath part | | Amorphous copolymerized polyester | Amorphous copolymerized polyester | Amorphous copolymerized polyester | Amorphous copolymerized polyester | Amorphous copolymerized polyester | Amorphous copolymerized polyester |
| | | Melting point — Core part | °C | 255 | 255 | 255 | 255 | 255 | 255 |
| | | Melting point — Sheath part | | 110 | 110 | 110 | 110 | 110 | 110 |
| | | Fineness | dtex | 4.4 | 4.4 | 4.4 | 4.4 | 4.4 | 4.4 |
| | | Content mass | % by mass | 30 | 30 | 30 | 30 | 30 | 30 |
| | Basis weight | | g/m$^2$ | 60 | 60 | 60 | 60 | 60 | 60 |
| | Thickness | | mm | 5 | 5 | 5 | 5 | 5 | 5 |
| | Tensile elongation at break (followability) | | % | 65 | 65 | 65 | 65 | 65 | 65 |
| Physical properties of non-woven fabric for sound-absorbing material | Basis weight | | g/m$^2$ | 360 | 360 | 360 | 360 | 360 | 360 |
| | Thickness | | mm | 30 | 30 | 30 | 30 | 30 | 30 |
| | Static friction coefficient (smoothness) | | – | 0.45 | 0.45 | 0.45 | 0.45 | 0.45 | 0.45 |
| | Thickness after pressing | | mm | 13 | 19 | 16 | 14 | 13 | 16 |
| | Thickness recoverability during molding | | % | 43 | 63 | 53 | 47 | 43 | 53 |
| | Fiber fall-off amount during cutting | | mg/m | 4 | 9 | 10 | 10 | 8 | 9 |
| | Low-frequency sound absorption coefficient (1000 Hz) | | % | 51 | 61 | 76 | 64 | 52 | 67 |
| | High-frequency sound absorption coefficient (2000 Hz) | | % | 89 | 98 | 91 | 94 | 90 | 96 |

[Table 3]

| | | | Unit | Example 13 | Example 14 | Example 15 | Example 16 | Example 17 | Example 18 |
|---|---|---|---|---|---|---|---|---|---|
| Non-woven fabric layer α | Short fibers A | Materials | – | PET | PET | PET | PET | PET | PET |
| | | Melting point | °C | 255 | 255 | 255 | 255 | 255 | 255 |
| | | Fineness | dtex | 0.6 | 0.6 | 0.6 | 0.6 | 0.6 | 0.6 |
| | | Content mass | % by mass | 35 | 35 | 35 | 35 | 35 | 35 |
| | Short fibers B | Materials | – | PET | PET | PET | PET | PET | PET |
| | | Melting point | °C | 255 | 255 | 255 | 255 | 255 | 255 |
| | | Fineness | dtex | 6.6 | 6.6 | 6.6 | 6.6 | 6.6 | 6.6 |
| | | Content mass | % by mass | 60 | 60 | 60 | 60 | 60 | 60 |
| | Short fibers C1 | Forms | – | Core-sheath | Core-sheath | Core-sheath | Core-sheath | Core-sheath | Core-sheath |
| | | Materials Core part | – | PET | PET | PET | PET | PET | PET |
| | | Materials Sheath part | – | Crystalline copolymerized polyester | Amorphous copolymerized polyester | Crystalline copolymerized polyester | Crystalline copolymerized polyester | Crystalline copolymerized polyester | Crystalline copolymerized polyester |
| | | Melting point Core part | °C | 255 | 255 | 255 | 255 | 255 | 255 |
| | | Melting point Sheath part | °C | 175 | 160 | 160 | 160 | 160 | 160 |
| | | Fineness | dtex | 2.2 | 2.2 | 2.2 | 2.2 | 2.2 | 2.2 |
| | | Content mass | % by mass | 5 | 5 | 5 | 5 | 5 | 5 |
| | Content mass of short fibers A and short fibers B | | % by mass | 95 | 95 | 95 | 95 | 95 | 95 |
| | Content mass ratio of short fibers A and short fibers B (Content mass of short fibers A/Content mass of short fibers B) | | – | 0.58 | 0.58 | 0.58 | 0.58 | 0.58 | 0.58 |
| | Basis weight | | g/m² | 300 | 300 | 300 | 300 | 250 | 200 |
| | Thickness | | mm | 25 | 25 | 25 | 25 | 25 | 25 |
| Non-woven fabric layer β | Other short fibers | Materials | – | PET | PET | PET | PET | PET | PET |
| | | Melting point | °C | 255 | 255 | 255 | 255 | 255 | 255 |
| | | Fineness | dtex | 6.6 | 6.6 | 6.6 | 6.6 | 6.6 | 6.6 |
| | | Content mass | % by mass | 70 | 70 | 60 | 50 | 70 | 70 |
| | Short fibers C2 | Forms | – | Core-sheath | Core-sheath | Core-sheath | Core-sheath | Core-sheath | Core-sheath |
| | | Materials Core part | – | PET | PET | PET | PET | PET | PET |
| | | Materials Sheath part | – | Amorphous copolymerized polyester | Amorphous copolymerized polyester | Amorphous copolymerized polyester | Amorphous copolymerized polyester | Amorphous copolymerized polyester | Amorphous copolymerized polyester |
| | | Melting point Core part | °C | 255 | 255 | 255 | 255 | 255 | 255 |
| | | Melting point Sheath part | °C | 110 | 110 | 110 | 110 | 110 | 110 |
| | | Fineness | dtex | 4.4 | 4.4 | 4.4 | 4.4 | 4.4 | 4.4 |
| | | Content mass | % by mass | 30 | 30 | 40 | 50 | 30 | 30 |
| | Basis weight | | g/m² | 60 | 60 | 60 | 60 | 60 | 60 |
| | Thickness | | mm | 5 | 5 | 5 | 5 | 5 | 5 |
| | Tensile elongation at break (followability) | | % | 65 | 65 | 53 | 46 | 65 | 65 |
| Physical properties of non-woven fabric for sound-absorbing material | Basis weight | | g/m² | 360 | 360 | 360 | 360 | 310 | 260 |
| | Thickness | | mm | 30 | 30 | 30 | 30 | 30 | 30 |
| | Static friction coefficient (smoothness) | | – | 0.45 | 0.45 | 0.43 | 0.40 | 0.45 | 0.45 |
| | Thickness after pressing | | mm | 20 | 18 | 17 | 17 | 17 | 15 |
| | Thickness recoverability during molding | | % | 67 | 60 | 57 | 57 | 57 | 50 |
| | Fiber fall-off amount during cutting | | mg/m | 22 | 27 | 9 | 9 | 9 | 7 |
| | Low-frequency sound absorption coefficient (1000 Hz) | | % | 77 | 74 | 72 | 73 | 68 | 65 |
| | High-frequency sound absorption coefficient (2000 Hz) | | % | 90 | 92 | 93 | 92 | 94 | 97 |

In the non-woven fabrics for a sound-absorbing material of Examples 1 to 18, the tensile elongation at break of the non-woven fabric layer β was high, the followability was excellent, the static friction coefficient of the non-woven fabric for a sound-absorbing material was low, and the smoothness was excellent. In addition, the thickness after pressing was relatively large, the thickness recoverability during molding was excellent, and the fiber fall-off amount during cutting was small, which is good. Furthermore, the layered non-woven fabric for a sound-absorbing material had a high low-frequency sound absorption coefficient and a high high-frequency sound absorption coefficient.

In the non-woven-fabric layered body for a sound-absorbing material of Example, compared to the non-woven-fabric layered body for a sound-absorbing material of Comparative Example 10, due to the effect of the content of the short fibers C2, the tensile elongation at break of the non-woven fabric layer β was higher, the followability was more excellent, the static friction coefficient of the non-woven fabric for a sound-absorbing material was lower, and the smoothness was more excellent. In addition, the thickness after pressing was large, and the thickness recoverability during molding was more excellent due to the effect of the short fibers B in comparison with Comparative Example 3, the effect of the short fibers C1 in comparison with Comparative Example 4, the effect of the content mass ratio of the short fibers A and the short fibers B in comparison with Comparative Example 7, and the effect of the melting point of the sheath part of the short fibers C1 in comparison with Comparative Example 8.

Regarding the fiber fall-off amount during cutting, the fiber fall-off amount was smaller due to the effect of the content of the short fibers C1 in comparison with Comparative Example 5 and the effect of the melting point of the sheath part of the short fibers C1 in comparison with Comparative Example 9, which is good.

Furthermore, in comparison with Comparative Examples 1, 2, 3, 6, and 7, due to the effects of the fineness, the blending amount, and the blending ratio of the short fibers A and B, and in comparison with Comparative Examples 4 and 8, due to the effects of the content of the short fibers C1 and the melting point of the sheath part, a non-woven-fabric layered body for a sound-absorbing material having a high low-frequency sound absorption coefficient and a high high-frequency sound absorption coefficient of the layered non-woven fabric for a sound-absorbing material was obtained. Comparative Examples, whith features not falling under the present invention as specified in claim 1, will be described below.

<Comparative Example 1>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.58, a basis weight of 300 g/m², and a thickness of 25 mm, and the non-woven fabric layer β having a basis weight of 60 g/m² and a thickness of 5 mm under the same processes and conditions as in Example 1 except that the short fibers A of the non-woven fabric layer α were changed to short fibers of polyethylene terephthalate (PET) having a fineness of 0.3 dtex and a melting point of 255°C. The configuration and evaluation results of the non-woven fabric for a sound-absorbing material are shown in Table 4.

In the non-woven fabric for a sound-absorbing material of Comparative Example 1, the tensile elongation at break of the non-woven fabric layer β was high, the followability was excellent, the static friction coefficient of the non-woven fabric for a sound-absorbing material was low, and the smoothness was excellent. In addition, the thickness after pressing was large, the thickness recoverability during molding was excellent, and the fiber fall-off amount during cutting was small, which is good. However, the layered non-woven fabric for a sound-absorbing material had a low low-frequency sound absorption coefficient and a low high-frequency sound absorption coefficient.

<Comparative Example 2>

A non-woven-fabric layered body for a sound-absorbing material was obtained from the non-woven fabric layer α having a content mass of the short fibers A and the short fibers B of 95% by mass, a basis weight of 300 g/m², and a thickness of 25 mm, and the non-woven fabric layer β having a basis weight of 60 g/m² and a thickness of 5 mm under the same processes and conditions as in Example 1 except that 95% by mass of short fibers of polyethylene terephthalate (PET) having a fineness of 4.4 dtex and a melting point of 255°C were used as the short fibers B of the non-woven fabric layer α, 5% by mass of short fibers C1 of Example 1 were used as the short fibers C1, and the short fibers A were not used. The configuration and evaluation results of the non-woven fabric for a sound-absorbing material are shown in Table 4. In the non-woven fabric for a sound-absorbing material of Comparative Example 2, the layered non-woven fabric for a sound-absorbing material had a low low-frequency sound absorption coefficient and a low high-frequency sound absorption coefficient.

<Comparative Example 3>

A non-woven-fabric layered body for a sound-absorbing material was obtained from the non-woven fabric layer α having a content mass of the short fibers A and the short fibers B of 95% by mass, a basis weight of 300 g/m², and a thickness of 25 mm, and the non-woven fabric layer β having a basis weight of 60 g/m² and a thickness of 5 mm under the same processes and conditions as in Example 1 except that 95% by mass of short fibers of polyethylene terephthalate (PET) having a fineness of 3.6 dtex and a melting point of 255°C were used as the short fibers A of the non-woven fabric layer α, 5% by mass of short fibers C1 of Example 1 were used as the short fibers C1, and the short fibers B were not used. The configuration and evaluation results of the non-woven fabric for a sound-absorbing material are shown in Table 4. The non-woven fabric for a sound-absorbing material of Comparative Example 3 had a small thickness after pressing and poor thickness recoverability during molding, and the layered non-woven fabric for a sound-absorbing material had a low low-frequency sound absorption coefficient and a low high-frequency sound absorption coefficient.

<Comparative Example 4>

A non-woven-fabric layered body for a sound-absorbing material was obtained from the non-woven fabric layer α having a content mass of the short fibers A and the short fibers B of 85% by mass, a content mass ratio of the short fibers A and the short fibers B of 0.55, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 30% by mass, 55% by mass, and 15% by mass. The configuration and evaluation results of the non-woven fabric for a sound-absorbing material are shown in Table 4. The non-woven fabric for a sound-absorbing material of Comparative Example 4 had a small thickness after pressing and poor thickness recoverability during molding, and the layered non-woven fabric for a sound-absorbing material had a low low-frequency sound absorption coefficient and a low high-frequency sound absorption coefficient.

<Comparative Example 5>

A non-woven-fabric layered body for a sound-absorbing material was obtained from the non-woven fabric layer α having a content mass of the short fibers A and the short fibers B of 99% by mass, a content mass ratio of the short fibers A and the short fibers B of 0.60, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 37% by mass, 62% by mass, and 1% by mass. The configuration and evaluation results of the non-woven fabric for a sound-absorbing material are shown in Table 4. The non-woven fabric for a sound-absorbing material of Comparative Example 5 had a large fiber fall-off amount during cutting and was poor.

<Comparative Example 6>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 0.04, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 4% by mass, 91% by mass, and 5% by mass. The configuration and evaluation results of the non-woven fabric for a sound-absorbing material are shown in Table 4. In the non-woven fabric for a sound-absorbing material of Comparative Example 6, the layered non-woven fabric for a sound-absorbing material had a low low-frequency sound absorption coefficient and a low high-frequency sound absorption coefficient.

<Comparative Example 7>

A non-woven-fabric layered body for a sound-absorbing material was obtained from the non-woven fabric layer α having a content mass of the short fibers A and the short fibers B of 95% by mass, a content mass ratio of the short fibers A and the short fibers B of 4.00, a basis weight of 300 g/m$^2$, and a thickness of 25 mm, and the non-woven fabric layer β having a basis weight of 60 g/m$^2$ and a thickness of 5 mm under the same processes and conditions as in Example 1 except that the short fibers A of Example 1 were used as the short fibers A of the non-woven fabric layer α, the short fibers B of Example 1 were used as the short fibers B, the short fibers C1 of Example 1 were used as the short fibers C1, and each content mass of these short fibers was changed to 76% by mass, 19% by mass, and 5% by mass. The configuration and evaluation results of the non-woven fabric for a sound-absorbing material are shown in Table 5. The non-woven fabric for a sound-absorbing material of Comparative Example 7 had a small thickness after pressing and poor thickness recoverability during molding, and the layered non-woven fabric for a sound-absorbing material had a low low-frequency sound absorption coefficient and a low high-frequency sound absorption coefficient.

<Comparative Example 8>

A non-woven-fabric layered body for a sound-absorbing material was obtained from the non-woven fabric layer $\alpha$ having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer $\beta$ having a basis weight of 60 g/m$^2$ and a thickness of 5 mm under the same processes and conditions as in Example 1 except that the short fibers C1 of the non-woven fabric layer $\alpha$ were changed to core-sheath short fibers (core-sheath ratio of 1 : 1) having a fineness of 2.2 dtex and made of polyethylene terephthalate (PET) with a melting point of 255°C in the core part and crystalline copolymerized polyester with a melting point of 130°C in the sheath part. The configuration and evaluation results of the non-woven fabric for a sound-absorbing material are shown in Table 5. The non-woven fabric for a sound-absorbing material of Comparative Example 8 had a small thickness after pressing and poor thickness recoverability during molding, and the layered non-woven fabric for a sound-absorbing material had a low low-frequency sound absorption coefficient and a low high-frequency sound absorption coefficient.

<Comparative Example 9>

A non-woven-fabric layered body for a sound-absorbing material was obtained from the non-woven fabric layer $\alpha$ having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer $\beta$ having a basis weight of 60 g/m$^2$ and a thickness of 5 mm under the same processes and conditions as in Example 1 except that the short fibers C1 of the non-woven fabric layer $\alpha$ were changed to core-sheath short fibers (core-sheath ratio of 1 : 1) having a fineness of 2.2 dtex and made of polyethylene terephthalate (PET) with a melting point of 255°C in the core part and crystalline copolymerized polyester with a melting point of 195°C in the sheath part. The configuration and evaluation results of the non-woven fabric for a sound-absorbing material are shown in Table 5. The non-woven fabric for a sound-absorbing material of Comparative Example 9 had a large fiber fall-off amount during cutting and was poor.

<Comparative Example 10>

A non-woven-fabric layered body for a sound-absorbing material was obtained from the non-woven fabric layer $\alpha$ having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer $\beta$ having a basis weight of 60 g/m$^2$ and a thickness of 5 mm under the same processes and conditions as in Example 1 except that the short fibers of polyethylene terephthalate (PET) having a fineness of 6.6 dtex and a melting point of 255°C were used as the short fibers of the non-woven fabric layer $\beta$, the short fibers C2 of Example 1 were used as the short fibers C2, and each content mass of these short fibers was changed to 82% by mass and 18% by mass. The configuration and evaluation results of the non-woven fabric for a sound-absorbing material are shown in Table 5. In the non-woven fabric for a sound-absorbing material of Comparative Example 10, the static friction coefficient of the non-woven fabric for a sound-absorbing material was high, and the smoothness was poor.

<Comparative Example 11>

A non-woven-fabric layered body for a sound-absorbing material was obtained from the non-woven fabric layer $\alpha$ having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer $\beta$ having a basis weight of 60 g/m$^2$ and a thickness of 5 mm under the same processes and conditions as in Example 1 except that the short fibers of polyethylene terephthalate (PET) having a fineness of 6.6 dtex and a melting point of 255°C were used as the short fibers of the non-woven fabric layer $\beta$, the short fibers C2 of Example 1 were used as the short fibers C2, and each content mass of these short fibers was changed to 35% by mass and 65% by mass. The configuration and evaluation results of the non-woven fabric for a sound-absorbing material are shown in Table 5. In the non-woven fabric for a sound-absorbing material of Comparative Example 11, the tensile elongation at break of the non-woven fabric layer $\beta$ was low and the followability was poor.

<Comparative Example 12>

A non-woven fabric for a sound-absorbing material was obtained from the non-woven fabric layer $\alpha$ having a content mass of the short fibers A and the short fibers B of 95% by mass, a content mass ratio of the short fibers A and the short fibers B of 0.58, a basis weight of 300 g/m$^2$, and a thickness of 25 mm under the same processes and conditions as in Example 1 except that the non-woven fabric layer $\beta$ was not used and the non-woven fabric for a sound-absorbing material composed only of the non-woven fabric layer $\alpha$ was used. The configuration and evaluation results of the non-woven fabric for a sound-absorbing material are shown in Table 5.

Since the non-woven fabric for a sound-absorbing material of Comparative Example 12 did not use the non-woven fabric layer $\beta$, the static friction coefficient was high, smoothness was poor, and during the pressing process, the non-woven fabric partly scraped or broke due to friction with the metal plate. The thickness after pressing was large, the thickness recoverability during molding was excellent, and the fiber fall-off amount during cutting was small, which is good. However, the layered non-woven fabric for a sound-absorbing material had a low low-frequency sound absorption coefficient and a low high-frequency sound absorption coefficient.

<Comparative Example 13>

A non-woven fabric for a sound-absorbing material was obtained from the non-woven fabric layer $\alpha$ having a content mass of the short fibers A and the short fibers B of 95% by mass, a content mass ratio of the short fibers A and the short fibers B of 0.58, a basis weight of 300 g/m$^2$, and a thickness of 25 mm, and the non-woven fabric layer $\beta$ having a basis weight of 60 g/m$^2$ and a thickness of 5 mm under the same processes and conditions as in Example 1 except that the short fibers C2 of the non-woven fabric layer $\beta$ were not used, and the short fibers were changed to 100% by mass of short fibers of polyethylene terephthalate (PET) having a fineness of 6.6 dtex and a melting point of 255°C. The non-woven fabric layer $\alpha$ and the non-woven fabric layer $\beta$ were not partially fused. The configuration and evaluation results of the non-woven fabric for a sound-absorbing material are shown in Table 5.

In the non-woven fabric for a sound-absorbing material of Comparative Example 13, since the short fibers C2 were not used, the non-woven fabric layer $\alpha$ and the non-woven fabric layer $\beta$ were not integrated in the thermal bonding process, and a non-woven-fabric layered body for a sound-absorbing material could not be obtained. In the press working, the non-woven fabric layer $\alpha$ and the non-woven fabric layer $\beta$ were separated without being integrated, and further, wrinkles were generated on the surface of the non-woven fabric, and the quality was greatly deteriorated. Accordingly, the normal incidence sound absorption coefficient could not be measured.

[Table 4]

| | | | Unit | Comparative Example 1 | Comparative Example 2 | Comparative Example 3 | Comparative Example 4 | Comparative Example 5 | Comparative Example 6 |
|---|---|---|---|---|---|---|---|---|---|
| Non-woven fabric layer α | Short fibers A | Materials | – | PET | – | PET | PET | PET | PET |
| | | Melting point | °C | 255 | – | 255 | 255 | 255 | 255 |
| | | Fineness | dtex | 0.3 | – | 3.6 | 0.6 | 0.6 | 0.6 |
| | | Content mass | % by mass | 35 | – | 95 | 30 | 37 | 4 |
| | Short fibers B | Materials | – | PET | PET | – | PET | PET | PET |
| | | Melting point | °C | 255 | 255 | – | 255 | 255 | 255 |
| | | Fineness | dtex | 6.6 | 4.4 | – | 6.6 | 6.6 | 6.6 |
| | | Content mass | % by mass | 60 | 95 | – | 55 | 62 | 91 |
| | Short fibers C1 | Forms | – | Core-sheath | Core-sheath | Core-sheath | Core-sheath | Core-sheath | Core-sheath |
| | | Materials — Core part | – | PET | PET | PET | PET | PET | PET |
| | | Materials — Sheath part | | Crystalline copolymerized polyester | Crystalline copolymerized polyester | Crystalline copolymerized polyester | Crystalline copolymerized polyester | Crystalline copolymerized polyester | Crystalline copolymerized polyester |
| | | Melting point — Core part | °C | 255 | 255 | 255 | 255 | 255 | 255 |
| | | Melting point — Sheath part | | 160 | 160 | 160 | 160 | 160 | 160 |
| | | Fineness | dtex | 2.2 | 2.2 | 2.2 | 2.2 | 2.2 | 2.2 |
| | | Content mass | % by mass | 5 | 5 | 5 | 15 | 1 | 5 |
| | Content mass of short fibers A and short fibers B | | % by mass | 95 | 95 | 95 | 85 | 99 | 95 |
| | Content mass ratio of short fibers A and short fibers B (Content mass of short fibers A/Content mass of short fibers B) | | – | 0.58 | – | – | 0.55 | 0.60 | 0.04 |
| | Basis weight | | g/m² | 300 | 300 | 300 | 300 | 300 | 300 |
| | Thickness | | mm | 25 | 25 | 25 | 25 | 25 | 25 |
| Non-woven fabric layer β | Other short fibers | Materials | – | PET | PET | PET | PET | PET | PET |
| | | Melting point | °C | 255 | 255 | 255 | 255 | 255 | 255 |
| | | Fineness | dtex | 6.6 | 6.6 | 6.6 | 6.6 | 6.6 | 6.6 |
| | | Content mass | % by mass | 70 | 70 | 70 | 70 | 70 | 70 |
| | Short fibers C2 | Forms | – | Core-sheath | Core-sheath | Core-sheath | Core-sheath | Core-sheath | Core-sheath |
| | | Materials — Core part | – | PET | PET | PET | PET | PET | PET |
| | | Materials — Sheath part | | Amorphous copolymerized polyester | Amorphous copolymerized polyester | Amorphous copolymerized polyester | Amorphous copolymerized polyester | Amorphous copolymerized polyester | Amorphous copolymerized polyester |
| | | Melting point — Core part | °C | 255 | 255 | 255 | 255 | 255 | 255 |
| | | Melting point — Sheath part | | 110 | 110 | 110 | 110 | 110 | 110 |
| | | Fineness | dtex | 4.4 | 4.4 | 4.4 | 4.4 | 4.4 | 4.4 |
| | | Content mass | % by mass | 30 | 30 | 30 | 30 | 30 | 30 |
| | Basis weight | | g/m² | 60 | 60 | 60 | 60 | 60 | 60 |
| | Thickness | | mm | 5 | 5 | 5 | 5 | 5 | 5 |
| | Tensile elongation at break (followability) | | % | 65 | 65 | 65 | 65 | 65 | 65 |
| Physical properties of non-woven fabric for sound-absorbing material | Basis weight | | g/m² | 360 | 360 | 360 | 360 | 360 | 360 |
| | Thickness | | mm | 30 | 30 | 30 | 30 | 30 | 30 |
| | Static friction coefficient (smoothness) | | – | 0.45 | 0.45 | 0.45 | 0.45 | 0.45 | 0.45 |
| | Thickness after pressing | | mm | 16 | 13 | 9 | 8 | 22 | 20 |
| | Thickness recoverability during molding | | % | 53 | 43 | 30 | 27 | 73 | 67 |
| | Fiber fall-off amount during cutting | | mg/m | 9 | 10 | 9 | 3 | 77 | 10 |
| | Low-frequency sound absorption coefficient (1000 Hz) | | % | 44 | 43 | 31 | 30 | 79 | 42 |
| | High-frequency sound absorption coefficient (2000 Hz) | | % | 78 | 78 | 70 | 69 | 90 | 77 |

[Table 5]

| | | | | Unit | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|
| Non-woven fabric layer α | Short fibers A | | Materials | – | PET | PET | PET | PET | PET | PET | PET |
| | | | Melting point | °C | 255 | 255 | 255 | 255 | 255 | 255 | 255 |
| | | | Fineness | dtex | 0.6 | 0.6 | 0.6 | 0.6 | 0.6 | 0.6 | 0.6 |
| | | | Content mass | % by mass | 76 | 35 | 35 | 35 | 35 | 35 | 35 |
| | Short fibers B | | Materials | – | PET | PET | PET | PET | PET | PET | PET |
| | | | Melting point | °C | 255 | 255 | 255 | 255 | 255 | 255 | 255 |
| | | | Fineness | dtex | 6.6 | 6.6 | 6.6 | 6.6 | 6.6 | 6.6 | 6.6 |
| | | | Content mass | % by mass | 19 | 60 | 60 | 60 | 60 | 60 | 60 |
| | Short fibers C1 | | Forms | – | Core-sheath | Core-sheath | Core-sheath | Core-sheath | Core-sheath | Core-sheath | Core-sheath |
| | | Materials | Core part | – | PET | PET | PET | PET | PET | PET | PET |
| | | | Sheath part | | Crystalline copolymerized polyester | Crystalline copolymerized polyester | Crystalline copolymerized polyester | Crystalline copolymerized polyester | Crystalline copolymerized polyester | Crystalline copolymerized polyester | Crystalline copolymerized polyester |
| | | Melting point | Core part | °C | 255 | 255 | 255 | 255 | 255 | 255 | 255 |
| | | | Sheath part | | 160 | 130 | 195 | 160 | 160 | 160 | 160 |
| | | | Fineness | dtex | 2.2 | 2.2 | 2.2 | 2.2 | 2.2 | 2.2 | 2.2 |
| | | | Content mass | % by mass | 5 | 5 | 5 | 5 | 5 | 5 | 5 |
| | Content mass of short fibers A and short fibers B | | | % by mass | 95 | 95 | 95 | 95 | 95 | 95 | 95 |
| | Content mass ratio of short fibers A and short fibers B (Content mass of short fibers A/Content mass of short fibers B) | | | – | 4.00 | 0.58 | 0.58 | 0.58 | 0.58 | 0.58 | 0.58 |
| | Basis weight | | | g/m² | 300 | 300 | 300 | 300 | 300 | 300 | 300 |
| | Thickness | | | mm | 25 | 25 | 25 | 25 | 25 | 25 | 25 |
| Non-woven fabric layer β | Other short fibers | | Materials | – | PET | PET | PET | PET | PET | – | PET |
| | | | Melting point | °C | 255 | 255 | 255 | 255 | 255 | – | 255 |
| | | | Fineness | dtex | 6.6 | 6.6 | 6.6 | 6.6 | 6.6 | – | 6.6 |
| | | | Content mass | % by mass | 70 | 70 | 70 | 82 | 35 | – | 100 |
| | Short fibers C2 | | Forms | – | Core-sheath | Core-sheath | Core-sheath | Core-sheath | Core-sheath | – | – |
| | | Materials | Core part | – | PET | PET | PET | PET | PET | – | – |
| | | | Sheath part | | Amorphous copolymerized polyester | Amorphous copolymerized polyester | Amorphous copolymerized polyester | Amorphous copolymerized polyester | Amorphous copolymerized polyester | – | – |
| | | Melting point | Core part | °C | 255 | 255 | 255 | 255 | 255 | – | – |
| | | | Sheath part | | 110 | 110 | 110 | 110 | 110 | – | – |
| | | | Fineness | dtex | 4.4 | 4.4 | 4.4 | 4.4 | 4.4 | – | – |
| | | | Content mass | % by mass | 30 | 30 | 30 | 18 | 65 | – | – |
| | Basis weight | | | g/m² | 60 | 60 | 60 | 60 | 60 | – | 60 |
| | Thickness | | | mm | 5 | 5 | 5 | 5 | 5 | – | 5 |
| | Tensile elongation at break (followability) | | | % | 65 | 65 | 65 | 76 | 34 | – | 66 |
| Physical properties of non-woven fabric for sound-absorbing material | Basis weight | | | g/m² | 360 | 360 | 360 | 360 | 360 | 300 | 360 |
| | Thickness | | | mm | 30 | 30 | 30 | 30 | 30 | 25 | 30 |
| | Static friction coefficient (smoothness) | | | – | 0.45 | 0.45 | 0.45 | 0.62 | 0.39 | 0.67 | 0.63 |
| | Thickness after pressing | | | mm | 9 | 8 | 21 | 18 | 17 | 15 | 23 |
| | Thickness recoverability during molding | | | % | 30 | 27 | 70 | 60 | 57 | 60 | 77 |
| | Fiber fall-off amount during cutting | | | mg/m | 11 | 8 | 56 | 11 | 10 | 10 | 25 |
| | Low-frequency sound absorption coefficient (1000 Hz) | | | % | 36 | 31 | 78 | 74 | 73 | 34 | (not evaluable) |
| | High-frequency sound absorption coefficient (2000 Hz) | | | % | 79 | 71 | 89 | 92 | 91 | 65 | (not evaluable) |

INDUSTRIAL APPLICABILITY

The non-woven fabric for a sound-absorbing material of the present invention is excellent in thickness recoverability and followability during molding and excellent in sound-absorbing performance, and thus is particularly suitably used as a sound-absorbing material for automobiles and the like.

**Claims**

1. A non-woven-fabric layered body for a sound-absorbing material in which a non-woven fabric layer α and a non-woven fabric layer β are layered, wherein

   the non-woven fabric layer α contains short fibers A having a fineness of 0.4 to 3.8 dtex, short fibers B having a fineness of 4.0 to 22.0 dtex, and short fibers C1 containing a resin having a melting point of 135 to 190°C in an outer surface layer,
   a total content mass of the short fibers A and the short fibers B with respect to a total mass of the non-woven fabric layer α is 86 to 98% by mass, a content mass of the short fibers C1 with respect to the total mass of the non-woven fabric layer α is 2 to 14% by mass, and a content mass ratio of the short fibers A and the short fibers B (content mass of short fibers A/content mass of short fibers B) is 0.05 to 3.80,
   the non-woven fabric layer β contains short fibers C2 containing a resin having a melting point of 70 to 190°C in an outer surface layer, and a content mass of the short fibers C2 with respect to a total mass of the non-woven fabric layer β is 20 to 60% by mass, and
   the non-woven fabric layer α and the non-woven fabric layer β are partially fused.

2. The non-woven-fabric layered body for a sound-absorbing material according to claim 1, wherein
   the short fibers C1 are core-sheath type composite short fibers, and the resin constituting the sheath part is a thermoplastic resin having a melting point of 135 to 190°C.

3. The non-woven-fabric layered body for a sound-absorbing material according to claim 1 or 2, wherein
   the short fibers C1 have a fineness of 1.0 to 5.0 dtex.

4. The non-woven-fabric layered body for a sound-absorbing material according to any one of claims 1 to 3, wherein
   the thermoplastic resin having a melting point of 135 to 190°C is a crystalline resin.

5. The non-woven-fabric layered body for a sound-absorbing material according to any one of claims 1 to 4, wherein
   the short fibers C2 are core-sheath type composite short fibers, and the resin constituting the sheath part is a thermoplastic resin having a melting point of 70 to 190°C.

6. The non-woven-fabric layered body for a sound-absorbing material according to any one of claims 1 to 5, wherein
   the thermoplastic resin having a melting point of 70 to 190°C is an amorphous resin.

7. The non-woven-fabric layered body for a sound-absorbing material according to any one of claims 1 to 6, wherein
   the non-woven fabric layer α has a basis weight of 100 $g/m^2$ or more and 700 $g/m^2$ or less, and the non-woven fabric layer α has a thickness of 7 mm or more and 40 mm or less.

8. The non-woven-fabric layered body for a sound-absorbing material according to any one of claims 1 to 7, wherein
   the non-woven fabric layer β has a basis weight of 30 $g/m^2$ or more and 120 $g/m^2$ or less.

9. The non-woven-fabric layered body for a sound-absorbing material according to any one of claims 1 to 8, wherein
   the non-woven fabric layer β has a tensile elongation at break of 50% or more and a static friction coefficient of 0.5 or less.

10. The non-woven-fabric layered body for a sound-absorbing material according to any one of claims 1 to 9, wherein
    the short fibers A, the short fibers B, the short fibers C1, and the short fibers C2 are all polyester short fibers.

11. A sound-absorbing material using the non-woven-fabric layered body for a sound-absorbing material according to any one of claims 1 to 10 as a base material and further containing

    a non-woven fabric layer for a skin γ having an air permeability of 3 to 50 $cm^3/cm^2/s$, wherein
    the non-woven fabric layer for a skin γ is layered on a surface of the non-woven-fabric layered body for a sound-absorbing material on the non-woven fabric layer α side.

**Patentansprüche**

1. Ein mehrschichtiger Vliesstoffkörper für ein schallabsorbierendes Material, in dem eine Vliesstoffschicht α und eine Vliesstoffschicht β geschichtet sind, wobei

   die Vliesstoffschicht α Kurzfasern A mit einer Feinheit von 0,4 bis 3,8 dtex, Kurzfasern B mit einer Feinheit von 4,0 bis 22,0 dtex, und Kurzfasern C1, die ein Harz mit einem Schmelzpunkt von 135 bis 190 °C enthalten, in einer äußeren Oberflächenschicht enthält,
   eine Gesamtgehaltsmasse der Kurzfasern A und der Kurzfasern B in Bezug auf eine Gesamtmasse der Vliesstoffschicht α 86 bis 98 Massen-% beträgt, eine Gehaltsmasse der Kurzfasern C1 in Bezug auf die Gesamtmasse der Vliesstoffschicht α 2 bis 14 Massen-% beträgt, und ein Gehaltsmassenverhältnis der Kurzfasern A und der Kurzfasern B (Gehaltsmasse der Kurzfasern A/Gehaltsmasse der Kurzfasern B) 0,05 bis 3,80 beträgt,
   die Vliesstoffschicht β Kurzfasern C2, die ein Harz mit einem Schmelzpunkt von 70 bis 190 °C enthalten, in einer äußeren Oberflächenschicht enthält und eine Gehaltsmasse der Kurzfasern C2 in Bezug auf eine Gesamtmasse der Vliesstoffschicht β 20 bis 60 Massen-% beträgt, und
   die Vliesstoffschicht α und die Vliesstoffschicht β teilweise verschmolzen sind.

2. Der mehrschichtige Vliesstoffkörper für ein schallabsorbierendes Material gemäß Anspruch 1, wobei die Kurzfasern C1 Verbundkurzfasern vom Kern-Mantel-Typ sind, und das Harz, das den Mantelteil bildet, ein thermoplastisches Harz mit einem Schmelzpunkt von 135 bis 190 °C ist.

3. Der mehrschichtige Vliesstoffkörper für ein schallabsorbierendes Material gemäß Anspruch 1 oder 2, wobei die Kurzfasern C1 eine Feinheit von 1,0 bis 5,0 dtex aufweisen.

4. Der mehrschichtige Vliesstoffkörper für ein schallabsorbierendes Material gemäß einem der Ansprüche 1 bis 3, wobei das thermoplastische Harz mit einem Schmelzpunkt von 135 bis 190 °C ein kristallines Harz ist.

5. Der mehrschichtige Vliesstoffkörper für ein schallabsorbierendes Material gemäß einem der Ansprüche 1 bis 4, wobei die Kurzfasern C2 Verbundkurzfasern vom Kern-Mantel-Typ sind, und das den Mantelteil bildende Harz ein thermoplastisches Harz mit einem Schmelzpunkt von 70 bis 190 °C ist.

6. Der mehrschichtige Vliesstoffkörper für ein schallabsorbierendes Material gemäß einem der Ansprüche 1 bis 5, wobei das thermoplastische Harz mit einem Schmelzpunkt von 70 bis 190 °C ein amorphes Harz ist.

7. Der mehrschichtige Vliesstoffkörper für ein schallabsorbierendes Material gemäß einem der Ansprüche 1 bis 6, wobei die Vliesstoffschicht α ein Flächengewicht von 100 g/m² oder mehr und 700 g/m² oder weniger aufweist, und die Vliesstoffschicht α eine Dicke von 7 mm oder mehr und 40 mm oder weniger aufweist.

8. Der mehrschichtige Vliesstoffkörper für ein schallabsorbierendes Material gemäß einem der Ansprüche 1 bis 7, wobei die Vliesstoffschicht β ein Flächengewicht von 30 g/m² oder mehr und 120 g/m² oder weniger aufweist.

9. Der mehrschichtige Vliesstoffkörper für ein schallabsorbierendes Material gemäß einem der Ansprüche 1 bis 8, wobei die Vliesstoffschicht β eine Reißdehnung von 50 % oder mehr und einen Haftreibungskoeffizienten von 0,5 oder weniger aufweist.

10. Der mehrschichtige Vliesstoffkörper für ein schallabsorbierendes Material gemäß einem der Ansprüche 1 bis 9, wobei die Kurzfasern A, die Kurzfasern B, die Kurzfasern C1 und die Kurzfasern C2 alle Polyesterkurzfasern sind.

11. Ein schallabsorbierendes Material, das den mehrschichtigen Vliesstoffkörper für ein schallabsorbierendes Material gemäß einem der Ansprüche 1 bis 10 als ein Basismaterial verwendet und ferner

    eine Vliesstoffschicht für eine Haut γ mit einer Luftdurchlässigkeit von 3 bis 50 cm³/cm²/s enthält, wobei die Vliesstoffschicht für eine Haut γ auf eine Oberfläche des mehrschichtigen Vliesstoffkörpers für ein schallabsorbierendes Material auf der Vliesstoffschicht α-Seite geschichtet ist.

**Revendications**

1. Un corps stratifié de tissu non tissé pour un matériau absorbant acoustique dans lequel une couche de tissu non tissé α et une couche de tissu non tissé β sont stratifiées, dans lequel

   la couche de tissu non tissé α contient des fibres courtes A ayant une finesse de 0,4 à 3,8 dtex, des fibres courtes B ayant une finesse de 4,0 à 22,0 dtex, et des fibres courtes C1 contenant une résine ayant un point de fusion de 135 à 190 °C dans une couche de surface externe,
   une masse de teneur totale des fibres courtes A et des fibres courtes B par rapport à une masse totale de la couche de tissu non tissé α est de 86 à 98 % en masse, une masse de teneur des fibres courtes C1 par rapport à la masse totale de la couche de tissu non tissé α est de 2 à 14 % en masse, et un rapport de masse de teneur des fibres courtes A et des fibres courtes B (masse de teneur des fibres courtes A/masse de teneur des fibres courtes B) est de 0,05 à 3,80,
   la couche de tissu non tissé β contient des fibres courtes C2 contenant une résine ayant un point de fusion de 70 à 190 °C dans une couche de surface externe, et une masse de teneur des fibres courtes C2 par rapport à une masse totale de la couche de tissu non tissé β est de 20 à 60 % en masse, et
   la couche de tissu non tissé α et la couche de tissu non tissé β sont partiellement fusionnées.

2. Le corps stratifié de tissu non tissé pour un matériau absorbant acoustique selon la revendication 1, dans lequel les fibres courtes C1 sont des fibres courtes composites de type âme-gaine, et la résine constituant la partie de gaine est une résine thermoplastique ayant un point de fusion de 135 à 190 °C.

3. Le corps stratifié de tissu non tissé pour un matériau absorbant acoustique selon la revendication 1 ou 2, dans lequel les fibres courtes C1 ont une finesse de 1,0 à 5,0 dtex.

4. Le corps stratifié de tissu non tissé pour un matériau absorbant acoustique selon l'une des revendications 1 à 3, dans lequel
   la résine thermoplastique ayant un point de fusion de 135 à 190 °C est une résine cristalline.

5. Le corps stratifié de tissu non tissé pour un matériau absorbant acoustique selon l'une des revendications 1 à 4, dans lequel
   les fibres courtes C2 sont des fibres courtes composites de type âme-gaine, et la résine constituant la partie de gaine est une résine thermoplastique ayant un point de fusion de 70 à 190 °C.

6. Le corps stratifié de tissu non tissé pour un matériau absorbant acoustique selon l'une des revendications 1 à 5, dans lequel
   la résine thermoplastique ayant un point de fusion de 70 à 190 °C est une résine amorphe.

7. Le corps stratifié de tissu non tissé pour un matériau absorbant acoustique selon l'une des revendications 1 à 6, dans lequel
   la couche de tissu non tissé α a un poids de base de 100 g/m² ou plus et de 700 g/m² ou moins, et la couche de tissu non tissé α a une épaisseur de 7 mm ou plus et de 40 mm ou moins.

8. Le corps stratifié de tissu non tissé pour un matériau absorbant acoustique selon l'une des revendications 1 à 7, dans lequel
   la couche de tissu non tissé β a un poids de base de 30 g/m² ou plus et de 120 g/m² ou moins.

9. Le corps stratifié de tissu non tissé pour un matériau absorbant acoustique selon l'une des revendications 1 à 8, dans lequel
   la couche de tissu non tissé β a un allongement à la rupture en traction de 50 % ou plus et un coefficient de frottement statique de 0,5 ou moins.

10. Le corps stratifié de tissu non tissé pour un matériau absorbant acoustique selon l'une des revendications 1 à 9, dans lequel
    les fibres courtes A, les fibres courtes B, les fibres courtes C1 et les fibres courtes C2 sont toutes des fibres courtes de polyester.

11. Un matériau absorbant acoustique utilisant le corps stratifié de tissu non tissé pour un matériau absorbant acoustique selon l'une des revendications 1 à 10 comme matériau de base et contenant en outre

une couche de tissu non tissé pour une peau $\gamma$ ayant une perméabilité à l'air de 3 à 50 cm$^3$/cm$^2$/s, dans lequel la couche de tissu non tissé pour une peau $\gamma$ est stratifiée sur une surface du corps stratifié de tissu non tissé pour un matériau absorbant acoustique sur le côté de la couche de tissu non tissé $\alpha$.

**REFERENCES CITED IN THE DESCRIPTION**

**Patent documents cited in the description**

- JP 2012024955 A
- JP 10245755 A
- WO 2018093458 A1
- WO 2017129468 A1
- EP 3730684 A1
- WO 2009037765 A1